(19) Europäisches Patentamt
European Patent Office
Office européen des brevets

(11) **EP 2 081 311 A1**

(12) **EUROPEAN PATENT APPLICATION**
published in accordance with Art. 153(4) EPC

(43) Date of publication:
**22.07.2009 Bulletin 2009/30**

(51) Int Cl.:
*H04J 11/00* (2006.01)   *H04B 7/06* (2006.01)

(21) Application number: **07829612.6**

(22) Date of filing: **11.10.2007**

(86) International application number:
**PCT/JP2007/069874**

(87) International publication number:
**WO 2008/047686 (24.04.2008 Gazette 2008/17)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.10.2006 JP 2006280129**

(71) Applicant: **Sharp Kabushiki Kaisha**
**Osaka-shi, Osaka 545-8522 (JP)**

(72) Inventors:
• **TO, Shimpei**
**Osaka-shi,**
**Osaka 545-8522, (JP)**
• **HAMAGUCHI, Yasuhiro**
**Osaka-shi,**
**Osaka 545-8522 (JP)**
• **NAMBA, Hideo**
**Osaka-shi,**
**Osaka 545-8522 (JP)**

(74) Representative: **Müller - Hoffmann & Partner**
**Patentanwälte**
**Innere Wiener Strasse 17**
**81667 München (DE)**

(54) **MULTICARRIER RADIO TRANSMISSION DEVICE, MULTICARRIER RADIO RECEPTION DEVICE, MULTICARRIER RADIO COMMUNICATION SYSTEM, MULTICARRIER RADIO TRANSMISSION METHOD, AND PROGRAM**

(57)   A multi-carrier radio transmission apparatus performs wireless communication using a subcarrier group including a plurality of subcarriers allocated at a given frequency interval. The multi-carrier radio transmission apparatus includes an interleaver 14a and a controller 26a that select a plurality of subcarriers from the subcarrier group based on a delay level difference indicated by a phase rotation difference for each of the subcarriers, which differs by a constant value among the subcarriers adjacent to one another. The multi-carrier radio transmission apparatus sequentially receives transmission data, disperses the transmission data onto the subcarriers selected, wirelessly transmits the transmission data by applying cyclic delay with a delay level 0 or a given delay level greater than the delay level 0 to the transmission data, and the transmission data by applying cyclic delay with a delay level differing by the delay level difference from the given delay level to the transmission data.

FIG. 2

**Description**

TECHNICAL FIELD

The present invention relates to a multi-carrier radio transmission apparatus, a multi-carrier radio reception apparatus, a multi-carrier radio communication system, a multi-carrier radio transmission method, and a program. Priority is claimed on Japanese Patent Application No. 2006-280129, filed October 13, 2006, the content of which is incorporated herein by reference.

BACKGROUND ART

With a recent increase in data traffic, needs for mobile communication systems using higher frequency utilization efficiency have been increasing and various techniques have been proposed. One of the techniques is OFDMA (Orthogonal Frequency Division Multiple Access) which will be adopted as the downlink access method of E-UTRA (Evolved Universal Terrestrial Radio Access) whose standardization is in progress mainly by the 3GPP (3rd Generation Partnership Project).

Cyclic delay diversity has been proposed as a downlink transmission diversity scheme for the E-UTRA system (see, for example, Non-patent Document 1). In the cyclic delay diversity, a transmitter including multiple antennas applies different delays to the antennas from which signals indicative of the same contents are transmitted to purposely generate a multipath and therefore improve channel quality by the diversity effect.

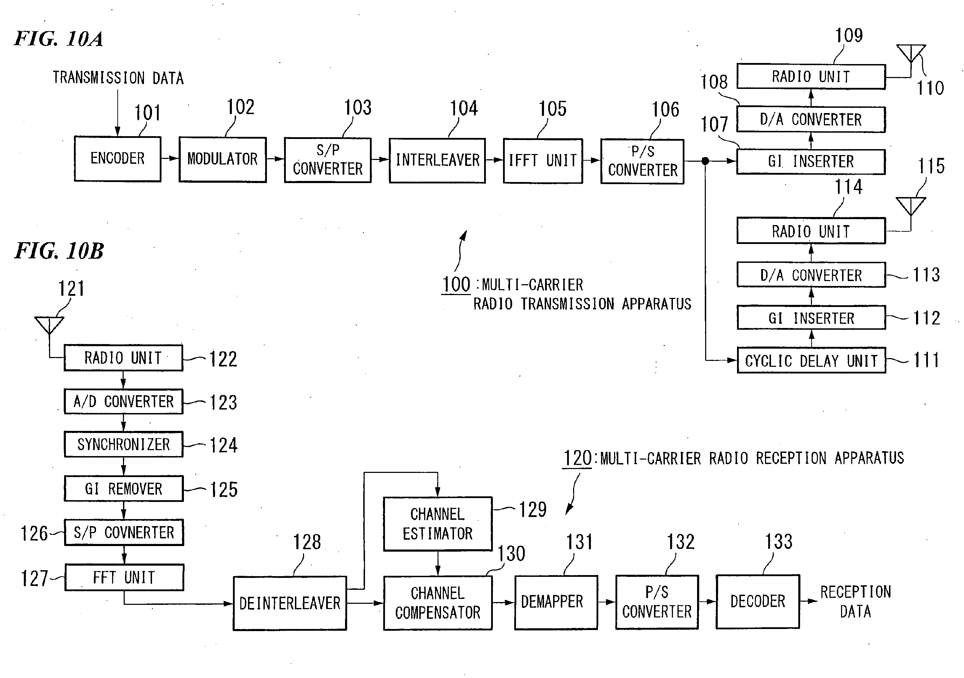

A multi-carrier radio transmission apparatus 100 and a multi-carrier radio reception apparatus 120 which are included in a multi-carrier radio transmission system achieving the cyclic delay diversity are shown in schematic block diagrams. FIG. 10A is a schematic block diagram illustrating the multi-carrier radio transmission apparatus 100. FIG. 10B is a schematic block diagram illustrating the multi-carrier radio reception apparatus 120.

As shown in FIG. 10A, the multi-carrier radio transmission apparatus 100 includes an encoder 101, a modulator 102, an S/P (Serial to Parallel) converter 103, an interleaver 104, an IFFT (Inverse Fast Fourier Transform) unit 105, a P/S (Parallel to Serial) converter 106, GI (Guard Interval) inserters 107 and 112, D/A (Digital to Analog) converters 108 and 113, radio units 109 and 114, antennas 110 and 115, and a cyclic delay unit 111.

The encoder 101 receives transmission data to be transmitted to the multi-carrier radio reception apparatus 120, performs error correction coding on the received transmission data, and outputs the resultant data to the modulator 102. The transmission data periodically includes known pilot data.

The modulator 102 modulates input transmission data to obtain data symbols, i.e., a data symbol string including data symbols each assigned the point number (the number of input points included in the IFFT unit 105 that will be explained later), and outputs the data symbol string to the S/P converter 104. The data symbols included in the data symbol string are grouped into multiple groups each including the given number of data symbols. Each group is called a subchannel.

The IFFT unit 105 includes input points, the number of which is the point number assigned and which respectively receive data symbols symbol by symbol. Additionally, the IFFT unit 105 includes output points, the number of which is the point number and which perform IFFT on the input data symbols to obtain the same number of samples (called OFDM symbols) and output obtained samples sample by sample.

The S/P converter 103 outputs the data symbols included in the input data symbol string in parallel to the respective input points of the IFFT unit 105. It is assumed that the input data symbol is denoted as $d_n$ where n is a natural number from 0 to N-1 and indicates the point number of each input point, and N is the number of points. Then, a baseband OFDM signal u(t) is defined as Expression (1) where $f_0$ is a predetermined frequency, and $nf_0$ is called a subcarrier.

[Expression 1]

$$u(t) = \sum_{n=0}^{N-1} d_n e^{j 2\pi n f_0 t} \quad \cdot \cdot \cdot (1)$$

The interleaver 104 is provided between the S/P converter 103 and the IFFT unit 105 and interleaves the input points to which the respective data symbols are input based on a given selection rule before the data symbols are really input.

The P/S converter 106 performs parallel-to-serial conversion on the OFDM symbols output from the IFFT unit 105 and outputs the converted symbols to the GI inserter 107 and the cyclic delay unit 111. Each of the samples constituting the OFDM symbols can be denoted as $u(k/Nf_0)$ shown in Expression (2) using the baseband OFDM signal $u(t)$ shown in Expression (1), where k is a natural number from 0 to N-1.

[Expression 2]

$$u\left(\frac{k}{Nf_0}\right) = \sum_{n=0}^{N-1} d_n \left( e^{j\frac{2\pi}{N}} \right)^{nk} \quad \cdots (2)$$

The GI inserter 107 adds a given GI to the input OFDM symbols and outputs the resultant symbols to the D/A converter 108. The processes so far are digital processes, and amplitudes of the OFDM symbols input to the D/A converter 108 are expressed by digital values. The D/A converter 108 obtains an analog signal based on the digital values and outputs the analog signal to the radio unit 109. The radio unit 109 converts the input analog signal into a radio frequency signal and transmits the radio frequency signal to a radio area.

On the other hand, the cyclic delay unit 111 performs a cyclic delay process on the input OFDM symbols and outputs the resultant symbols to the GI inserter 112. The GI inserter 112 to the antenna 115 perform similar processes to those performed by the GI inserter 107 to the antenna 110, and an analog signal is transmitted to a radio area.

As shown in FIG. 10B, the multi-carrier radio reception apparatus 120 includes an antenna 121, a radio unit 122, an A/D (Analog to Digital) converter 123, a synchronizer 124, a GI remover 125, an S/P converter 126, an FFT (Fast Fourier Transform) unit 127, a deinterleaver 128, a channel estimator 129, a channel compensator 130, a demapper 131, a P/S converter 132, and a decoder 133.

The antenna 121 receives the analog signal transmitted from the multi-carrier radio transmission apparatus 100 to a radio area in the above manner, and outputs the received analog signal to the radio unit 122. If the multi-carrier radio transmission apparatus 100 performs cyclic delay transmission, the received signal has periodic frequency selectivity and therefore the frequency diversity effect can be achieved.

The radio unit 122 converts the input analog signal to a frequency signal (baseband signal) that can be analog-to-digital converted, and outputs the converted signal to the A/D converter 123. The A/D converter 123 converts the input analog signal into a digital signal and outputs the converted signal to the synchronizer 124. The synchronizer 124 synchronizes data symbols based on the input digital signal and outputs the synchronized symbols to the GI remover 125. In this manner, the digital signal input to the GI remover 125 is the OFDM symbols.

The GI remover 125 removes the GI added to the OFDM symbols and outputs the OFDM symbols with the GI being removed to the S/P converter 126.

The FFT unit 127 includes input points, the number of which is the point number and which receive samples sample by sample. Additionally, the FFT unit 127 includes output points, the number of which is the point number and which perform FFT on respective input samples to obtain data symbol strings, and output data symbols symbol by symbol.

The S/P converter 126 outputs the samples constituting the input OFDM symbols in parallel to respective input points of the FFT unit 127.

The data symbol strings output from the FFT unit 127 are input to the deinterleaver 128. The deinterleaver 128 deinterleaves the output points from which the data symbols are output based on the selection rule, and outputs the resultant symbols to the channel estimator 129 and the channel compensator 130.

The channel estimator 129 extracts one or more data symbols indicative of the pilot data from the input data symbol strings, and estimates channel characteristics based on the extracted data symbols. Then, the channel estimator 129 outputs channel estimation values obtained from the channel estimation to the channel compensator 130.

The channel compensator 130 compensates a channel variation for the data symbol strings input from the FFT unit 127 and outputs the resultant data symbol strings to the demapper 131. In a system in which pilot data for channel estimation is not inserted into every subcarrier, channel estimation and channel compensation are preferably performed before deinterleaving. In this case, the deinterleaver 128 shown in FIG. 10B is provided after the channel compensator 130 in the multi-carrier radio reception apparatus.

The demapper 131 obtains communication data for each data symbol by demodulating each data symbol input, and outputs the communication data to the P/S converter 132. Although the processes so far are performed in parallel for each data symbol, the P/S converter 132 serially outputs the communication data input in parallel for each data symbol to the decoder 133 in a given order. The decoder 133 performs error correction decoding and reproducing on a series of input communication data.

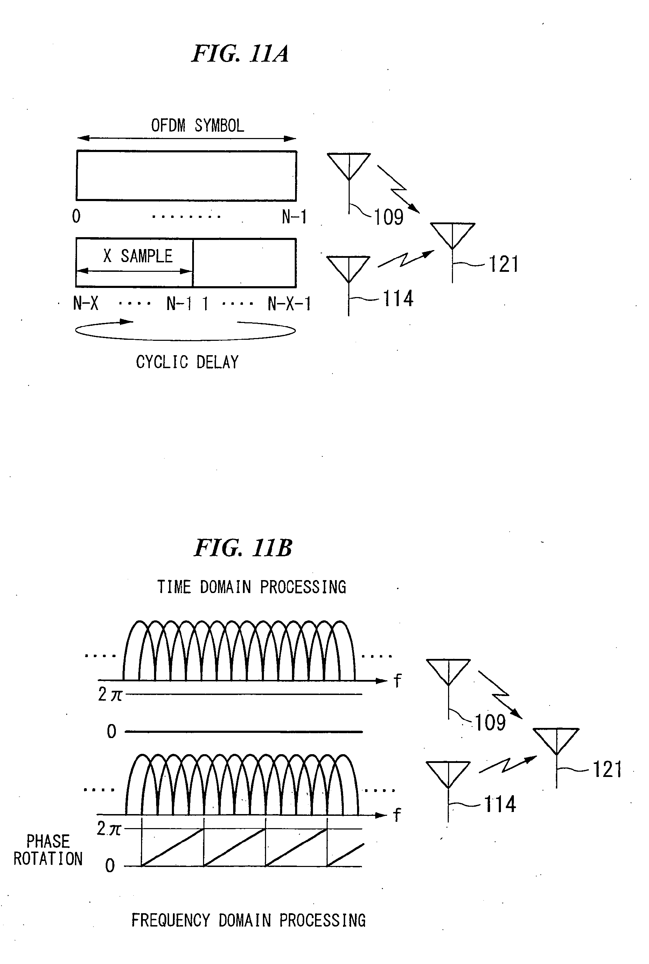

FIGS. 11A and 11B illustrate cyclic delay transmission. Cyclic delay transmission can be implemented by sequentially shifting samples included in the sample strings obtained from IFFT or by rotating the phase of transmission data before IFFT. Hereinafter, the former and the latter are called time-domain cyclic delay transmission and frequency-domain cyclic delay transmission, respectively. FIG. 11A illustrates time-domain cyclic delay transmission. FIG. 11B illustrates frequency-domain cyclic transmission.

As explained above, the OFDM symbols obtained as the result of the IFFT include N samples. In the time-domain cyclic delay transmission, delay can be achieved by shifting the order of the samples, as shown in FIG. 11A. If the delay level is Cd, for example, the k-th sample meeting the condition of Cd+k≤N-1 is shifted to the (Cd+k)-th sample. The k-th sample meeting the condition of Cd+k>N-1 is shifted to the (Cd+k-N)-th sample. Consequently, the OFDM symbols to be received by the reception apparatus can be expressed as Expressions (3) and (4).

[Expression 3]

$$u\left(\frac{k}{Nf_0}\right) = \sum_{n=0}^{N-1} d_n \left(e^{j\frac{2\pi}{N}}\right)^{n(k-Cd)} \qquad \left[Cd + k \leq N-1\right] \quad \cdots (3)$$

[Expression 4]

$$u\left(\frac{k}{Nf_0}\right) = \sum_{n=0}^{N-1} d_n \left(e^{j\frac{2\pi}{N}}\right)^{n(k-(Cd-N))} \qquad \left[Cd + k > N-1\right]$$

$$\cdots (4)$$

$$= \sum_{n=0}^{N-1} d_n \left(e^{j\frac{2\pi}{N}}\right)^{n(k-Cd)}$$

In other words, the reception apparatus receives OFDM symbols which are delayed by Cd that is the delay level difference from delay level 0 compared with the OFDM symbols which are applied cyclic delay with delay level 0. Expressions (3) and (4) can be transformed into Expression (5).

[Expression 5]

$$u\left(\frac{k}{Nf_0}\right) = \sum_{n=0}^{N-1} d_n \left(e^{j\frac{2\pi}{N}}\right)^{n(k-Cd)}$$

$$= \sum_{n=0}^{N-1}\left(d_n e^{j\frac{-2\pi nCd}{N}}\right)\left(e^{j\frac{2\pi}{N}}\right)^{nk} \quad \cdots (5)$$

Expression (5) indicates that delay can also be implemented by phase rotation for each $d_n$. In other words, cyclic delay can be achieved in the frequency-domain cyclic delay transmission by adding phase rotation of $2\pi nCd/N$ to each $d_n$. Although the phase rotation level differs according to a value of n (i.e., each subcarrier as shown in FIG. 11B), $\theta = 2\pi(n+1)Cd/N - 2\pi nCd/N = 2\pi Cd/N$ denoting that the phase rotation difference among adjacent subcarriers is constant regardless of n.

[Non-patent Document 1] "Intra-Node B Macro Diversity based on Cyclic Delay Transmissions", R1-050795, 3GPP TSG RAN WG1 #42 on LTE, London, UK, 29 August 2, September, 2005

DISCLOSURE OF THE INVENTION

Problems to be Solved by the Invention

The problem to be solved is that successive subcarriers having the low reception power might be present if both interleaving and cyclic delay transmission are performed as in the case of the multi-carrier radio transmission system, thereby causing a degradation of channel quality. Hereinafter, the details of such a problem are explained.

In cyclic delay transmission, the reception power of some subcarriers degrades at a frequency interval according to the phase rotation difference among adjacent subcarriers θ (or N/Cd). The degradation of the reception power is explained with reference to the multi-carrier radio transmission system shown in FIGS. 10A and 10B.

The reception power $R_n$ of a signal received by the multi-carrier radio reception apparatus 120 can be expressed as Expression (6) where $S_n$ denotes a transmission signal to be transmitted on the n-th subcarrier, $\phi_n$ denotes the phase rotation level to be applied to the transmission signal, $H1_n$ and $H2_n$ denote channel variation elements with respect to transmission signals from the antennas 110 and 115, respectively, and noise elements are ignored.

[Expression 6]

$$R_n = \left|H1_n S_n + H2_n S_n e^{-j\phi_n}\right|^2 \quad \cdots (6)$$

Expression (6) can be transformed into Expression (7) if $S_n$, $H1_n$, and $H2_n$ are assumed to be 1 for simplicity.

[Expression 7]

$$R_n = \left|1 + e^{-j\phi_n}\right|^2 \quad \cdots (7)$$

If the phase rotation difference among adjacent subcarriers $\theta = \phi_{k+1} - \phi_k$ is assumed to be $\pi/4$ and $\phi_0 = 0$ in Expression (7), $R_n$ with respect to each n can be expressed as Expression (8).

[Expression 8]

$$R_0 = 4$$

$$R_1 = 2 + \sqrt{2}$$

$$R_2 = 2$$

$$R_3 = 2 - \sqrt{2}$$

$$R_4 = 0 \qquad \cdots (8)$$

$$R_5 = 2 - \sqrt{2}$$

$$R_6 = 2$$

$$R_7 = 2 + \sqrt{2}$$

$$R_8 = 4$$

As shown in Expression (8), a value of the reception power $R_n$ differs according to subcarriers, and a variation period thereof is $2\pi/\theta = 8$. In other words, the reception powers of the subcarriers degrade at a frequency interval according to the phase rotation difference among adjacent subcarriers $\theta$.

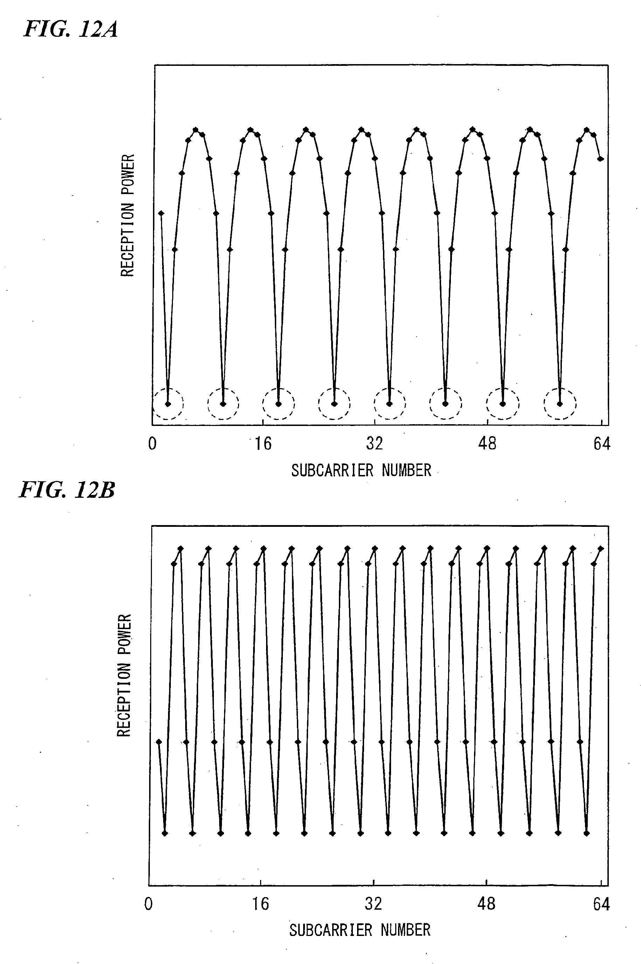

FIGS. 12A and 12B illustrate specific examples of frequency characteristics of reception signals when a multi-carrier transmission apparatus that includes two antennas and performs IFFT with the point number N=1024 in an OFDMA system. FIG. 12A illustrates the case where the delay level difference Cd is 128 ($\theta = \pi/4$ and N/Cd=8). FIG. 12B illustrates the case where the delay level difference Cd is 256 ($\theta = \pi/2$ and N/Cd=4). In FIGS. 12A and 12B, each bullet denotes a relationship between the subcarrier number and the reception power.

In the case of FIG. 12A, the reception power degrades with a period of 8 subcarriers similarly to Expression (8). In the case of FIG. 12B, the reception power degrades with a shorter period of 4 subcarriers. Thus, the reception powers of reception signals have periodic frequency characteristics with a period (=N/Cd) according to the phase rotation difference among adjacent subcarriers $\theta$.

If interleaving is not performed, sufficient compensation can be made with error correction even if some subcarriers cannot be received due to a degradation of the reception powers thereof. However, successive subcarriers that cannot be received might be present due to a degradation of reception powers thereof if the order of the subcarriers is changed by interleaving. In this case, even error correction cannot compensate the degradation of reception powers, thereby degrading the channel quality.

Therefore, an object of the present invention is to provide a multi-carrier radio transmission apparatus, a multi-carrier radio reception apparatus, a multi-carrier radio communication system, a multi-carrier radio transmission method, and a program for preventing a degradation of channel quality by performing both interleaving and cyclic delay transmission.

Means for Solving the Problems

The present invention is made to solve the problems. A multi-carrier radio transmission apparatus of the present invention performs wireless communication using a subcarrier group including a plurality of subcarriers allocated at a given frequency interval. The multi-carrier radio transmission apparatus includes: a selection unit that selects a plurality of subcarriers from the subcarrier group based on a delay level difference indicated by a phase rotation difference for each of the subcarriers, which differs by a constant value among the subcarriers adjacent to one another; and a radio transmission unit that sequentially receives transmission data, disperses the transmission data onto the subcarriers selected, wirelessly transmits the transmission data by applying cyclic delay with a delay level 0 or a given delay level greater than the delay level 0 to the transmission data, and the transmission data by applying cyclic delay with a delay level differing by the delay level difference from the given delay level to the transmission data.

Accordingly, a degradation of channel quality can be prevented by performing both interleaving (the selection of multiple subcarriers performed by the selection unit) and cyclic delay transmission.

The multi-carrier radio transmission apparatus may further include an encoder that performs given forward error correction on the transmission data, and the radio transmission unit may wirelessly transmit the transmission data subjected to the forward error correction performed by the encoder.

Accordingly, the multi-carrier radio reception apparatus can compensate data which cannot be received by means of data received by other subcarriers even if some subcarriers cannot be received.

In the multi-carrier radio transmission apparatus, the selection unit may select the subcarriers according to a plurality of subcarriers whose reception powers degrade after the radio transmission unit applies the cyclic delay to the transmission data.

Accordingly, for example, multiple subcarriers selected by the selection unit can be prevented from corresponding to multiple subcarriers whose reception powers degrade after cyclic delay transmission.

In the multi-carrier radio transmission apparatus, the selection unit may select, from the subcarrier group, the subcarriers at a given interval according to an interval at which a plurality of subcarriers whose reception powers degrade after the radio transmission unit applies the cyclic delay to the transmission data are allocated.

Accordingly, the determining unit can prevent intervals among subcarriers selected by the selection unit from corresponding to those among subcarriers whose reception powers degrade due to cyclic delay transmission.

In the multi-carrier radio transmission apparatus, the given interval may differ from an interval Is calculated using the following expression (9) or (10):

$$\text{Is=round}(n \times N/Cd) \text{ for Cd such that } 0 \leq Cd \leq N/2 \cdots (9);$$

or

$$\text{Is=round}(n \times N/(N-Cd)) \text{ for Cd such that } N/2 < Cd < N \cdots (10),$$

where Cd is the delay level difference, N is the number of subcarriers included in the subcarrier group, and n is a natural number.

As explained above, the reception power of each subcarrier degrades at an interval corresponding to the period N/Cd upon cyclic delay transmission. According to the above configuration, the constant interval Is can be set not to be a substantially integral multiple of the period N/Cd. Therefore, the determining unit can prevent the intervals among the subcarriers selected by the selection unit from corresponding to those among the subcarriers whose reception powers degrade in the cyclic delay transmission.

In the multi-carrier radio transmission apparatus, the transmission data may include dedicated transmission data to be individually transmitted to each of a plurality of multi-carrier radio reception apparatuses. The encoder may perform forward error correction for each of the multi-carrier radio reception apparatuses on the dedicated transmission data. The selection unit may select the subcarriers for each of the multi-carrier radio reception apparatuses based on the delay level difference for each of the multi-carrier radio reception apparatuses.

Accordingly, multiple subcarriers can be selected for each of the multi-carrier radio reception apparatuses based on the delay level difference for each of the multi-carrier radio reception apparatuses when dedicated transmission data subjected to forward error correction for each of the multi-carrier radio reception apparatuses is wirelessly transmitted. Therefore, a degradation of channel quality of communication with a specific multi-carrier radio reception apparatus can be prevented by performing both interleaving and cyclic delay transmission.

In the multi-carrier radio transmission apparatus, the transmission data may include dedicated transmission data to be individually transmitted to each of a plurality of multi-carrier radio reception apparatuses and broadcast transmission data to be simultaneously transmitted to the multi-carrier radio reception apparatuses. The multi-carrier radio transmission apparatus may further include a cyclic-delay-transmission determining unit that determines whether or not to perform cyclic delay transmission based on whether the transmission data is the dedicated transmission data or the broadcast transmission data. The delay level difference may be determined by a result of the determination performed by the cyclic-delay-transmission determining unit.

Accordingly, whether or not to perform cyclic delay transmission can be determined according to the type of transmission data (for example, channel conditions for dedicated transmission data can be improved by adjusting antenna directivity, but antenna directivity cannot be adjusted for broadcast transmission data, and therefore cyclic delay transmission is performed in the latter case). Based on the delay level difference determined according to the determination result, multiple subcarriers can be selected.

In the multi-carrier radio transmission apparatus, the selection unit may select the subcarriers based on the delay level difference for each of subchannels each including a given number of subcarrier groups. The radio transmission unit may apply the cyclic delay to the transmission data by applying phase rotation with phase rotation level indicated by the delay level for each of the subchannels.

Accordingly, the delay level difference and a selection rule which are different for each subchannel can be used.

A multi-carrier radio transmission apparatus according to another aspect of the present invention, includes: a selection unit that selects a plurality of subcarriers at a given interval from a subcarrier group including a plurality of subcarriers allocated at a given frequency interval; a delay-level-difference obtaining unit that obtains m delay level differences $Cd_{1, 2, ..., m}$ indicated by phase rotation differences for respective subcarriers, which differ by a constant value among the subcarriers adjacent to one another, m being equal to or greater than one; a reference radio transmission unit that disperses transmission data onto the subcarriers selected, and wirelessly transmits the transmission data by applying cyclic delay with a delay level 0 or a given delay level greater than the delay level 0 to the transmission data; and a k-th wireless transmission unit that disperses transmission data onto the sub carriers selected, and wirelessly transmits the transmission data by applying cyclic delay with a delay level differing by the delay level difference $Cd_k$ obtained by the delay-level-difference obtaining unit from the given delay level for the wireless transmission performed by the reference radio transmission unit, k being any one of 1 to m. The given interval differs from a least common multiple of m pieces of intervals $Is_k$ calculated using the following expression (11) or (12):

$$Is_k = \text{round}(n \times N / Cd_k) \text{ for Cd such that } 0 \leq Cd \leq N/2 \cdots (11);$$

or

$$Is_k = \text{round}(n \times N / (N - Cd_k)) \text{ for Cd such that } N/2 < Cd < N \cdots (12),$$

where N is the number of subcarriers included in the subcarrier groups, and n is a natural number.

Accordingly, intervals among multiple subcarriers selected by the selection unit can be prevented from corresponding to intervals among multiple subcarriers whose reception powers degrade after cyclic delay transmission.

A multi-carrier transmission apparatus according to another aspect of the present invention, includes: a selection unit that selects a plurality of second subcarriers from a subcarrier group including a plurality of first subcarriers allocated at a given frequency interval; a determining unit that determines, based on the second subcarriers selected, a delay level difference indicated by a phase rotation difference for each of the second subcarriers, which differs by a constant value among the second subcarriers adjacent to one another; and a radio transmission unit that sequentially receives transmission data, disperses the transmission data onto the second subcarriers selected, wirelessly transmits the transmission data by applying cyclic delay with a delay level 0 or a given delay level greater than the delay level 0 to the transmission data, and the transmission data by applying cyclic delay with a delay level differing by the delay level difference from the given delay level to the transmission data.

Similarly, a degradation of channel quality can be prevented by performing both interleaving and cyclic delay transmission.

A multi-carrier radio reception apparatus according to the present invention receives the transmission data wirelessly transmitted by the multi-carrier transmission apparatus. The multi-carrier radio reception apparatus receives the transmission data based on the subcarriers selected by the selection unit.

A multi-carrier radio communication system according to the present invention includes: the multi-carrier radio transmission apparatus; and a multi-carrier radio reception apparatus that receives the transmission data wirelessly transmitted by the multi-carrier radio transmission apparatus. The multi-carrier radio transmission apparatus transmits selection information indicative of the subcarriers selected by the selection unit to the multi-carrier radio reception apparatus, and the multi-carrier radio reception apparatus receives selection information and receives the transmission data based on the selection information received.

A multi-carrier radio transmission method according to the present invention is provided for radio transmission using a subcarrier group including a plurality of subcarriers allocated at a given frequency interval. The multi-carrier radio transmission method includes: a selection step of selecting a plurality of subcarriers from the subcarrier group based on a delay level difference indicated by a phase rotation difference for each of the subcarriers, which differs by a constant value among the subcarriers adjacent to one another; and a radio transmission step of sequentially receiving transmission data, dispersing the transmission data onto the subcarriers selected, and wirelessly transmitting the transmission data by applying cyclic delay with a delay level 0 or a given delay level greater than the delay level 0 to the transmission data, and the transmission data by applying cyclic delay with a delay level differing by the delay level difference from the given delay level to the transmission data.

A multi-carrier radio transmission method according to another aspect of the present invention, includes: a selection step of selecting a plurality of subcarriers at a given interval from a subcarrier group including a plurality of subcarriers allocated at a given frequency interval; a delay-level-difference obtaining step of obtaining m delay level differences $Cd_{1,2,...,m}$ indicated by phase rotation differences for respective subcarriers, which differ by a constant value among the subcarriers adjacent to one another, m being equal to or greater than one; a reference radio transmission step of dispersing transmission data onto the subcarriers selected, and wirelessly transmitting the transmission data by applying cyclic delay with a delay level 0 or a given delay level greater than the delay level 0 to the transmission data; and a k-th wireless transmission step of dispersing transmission data onto the subcarriers selected, and wirelessly transmitting the transmission data by applying cyclic delay with a delay level differing by the delay level difference $Cd_k$ obtained in the delay-level-difference obtaining step from the given delay level for the wireless transmission in the reference radio transmission step, k being any one of 1 to m. The given interval differs from a least common multiple of m pieces of intervals $Is_k$ calculated using the aforementioned expression (11) or (12), where N is the number of subcarriers included in the subcarrier group, and n is a natural number.

A multi-carrier transmission method according to another aspect of the present invention includes: a selection step of selecting a plurality of second subcarriers from a subcarrier group including a plurality of first subcarriers allocated at a given frequency interval; a determining unit that determines, based on the second subcarriers selected, a delay level difference indicated by a phase rotation difference for each of the second subcarriers, which differs by a constant value among the second subcarriers adjacent to one another; and a radio transmission step of sequentially receiving transmission data, dispersing the transmission data onto the second subcarriers selected, wirelessly transmitting the transmission data by applying cyclic delay with a delay level 0 or a given delay level greater than the delay level 0 to the transmission data, and the transmission data by applying cyclic delay with a delay level differing by the delay level difference from the given delay level to the transmission data.

A program according to the present invention makes a computer function as a multi-carrier radio transmission apparatus that perform wireless communication using a subcarrier group including a plurality of subcarriers allocated at a given frequency interval. The program further makes the computer function as: a selection unit that selects a plurality of subcarriers from the subcarrier group based on a delay level difference indicated by a phase rotation difference for each of the subcarriers, which differs by a constant value among the subcarriers adjacent to one another; and a radio transmission unit that sequentially receives transmission data, disperses the transmission data onto the subcarriers selected, wirelessly transmits the transmission data by applying cyclic delay with a delay level 0 or a given delay level greater than the delay level 0 to the transmission data, and the transmission data by applying cyclic delay with a delay level differing by the delay level difference from the given delay level to the transmission data.

A program according to another aspect of the present invention makes a computer function as a multi-carrier radio transmission apparatus including: a selection unit that selects a plurality of subcarriers at a given interval from a subcarrier group including a plurality of subcarriers allocated at a given frequency interval; a delay-level-difference obtaining unit that obtains m delay level differences $Cd_{1,2,...,m}$ indicated by phase rotation differences for respective subcarriers, which differ by a constant value among the subcarriers adjacent to one another, m being equal to or greater than one; a reference radio transmission unit that disperses transmission data onto the subcarriers selected, and wirelessly transmits the transmission data by applying cyclic delay with a delay level 0 or a given delay level greater than the delay level 0 to the transmission data; and a k-th wireless transmission unit that disperses transmission data onto the subcarriers selected, and wirelessly transmits the transmission data by applying cyclic delay with a delay level differing by the delay level difference $Cd_k$ obtained by the delay-level-difference obtaining unit from the given delay level for the wireless transmission performed by the reference radio transmission unit, k being any one of 1 to m. The given interval differs from a least common multiple of m pieces of intervals $Is_k$ calculated using the aforementioned expression (11) or (12), where N is the number of subcarriers included in the subcarrier groups, and n is a natural number.

A program according to another aspect of the present invention makes a computer function as a multi-carrier transmission apparatus including: a selection unit that selects a plurality of second subcarriers from a subcarrier group including a plurality of first subcarriers allocated at a given frequency interval; a determining unit that determines, based on the second subcarriers selected, a delay level difference indicated by a phase rotation difference for each of the second subcarriers, which differs by a constant value among the second subcarriers adjacent to one another; and a radio transmission unit that sequentially receives transmission data, disperses the transmission data onto the second subcarriers selected, wirelessly transmits the transmission data by applying cyclic delay with a delay level 0 or a given delay level greater than the delay level 0 to the transmission data, and the transmission data by applying cyclic delay with a delay level differing by the delay level difference from the given delay level to the transmission data.

Effects of the Invention

The multi-carrier radio transmission apparatus of the present invention can prevent a degradation of channel quality by performing both interleaving and cyclic delay transmission.

BRIEF DESCRIPTION OF THE DRAWINGS

FIG. 1 is a schematic block diagram illustrating the system configuration of a mobile communication system according to embodiments of the present invention.
FIG. 2 is a schematic block diagram illustrating the system configuration of a base station device according to a first embodiment of the present invention.
FIG. 3 is a schematic block diagram illustrating the system configuration of a mobile station device according to the first embodiment of the present invention.
FIG. 4 illustrates interleaving performed by an interleaver according to the first embodiment of the present invention.
FIG. 5A is a schematic block diagram illustrating an example of the reception powers in the case of radio transmission with the point number N=1024, the unit data symbol number=64, and the applied delay level=128 samples in the first embodiment of the present invention.
FIG. 5B is a schematic block diagram illustrating an example of the reception powers in the case of radio transmission with the point number N=1024, the unit data symbol number=64, the applied delay level=128 samples, and interleaving at the interval of 8 subcarriers in the first embodiment of the present invention.
FIG. 5C is a schematic block diagram illustrating an example of the reception powers in the case of radio transmission with the point number N=1024, the unit data symbol number=64, the applied delay level=128 samples, and interleaving at the interval of 4 subcarriers in the first embodiment of the present invention.
FIG. 6 is a schematic block diagram illustrating the computer simulation results showing an effect of preventing a degradation of channel quality according to the first embodiment of the present invention.
FIG. 7 is a schematic block diagram illustrating the system configuration of a base station device according to a second embodiment of the present invention.
FIG. 8 is a schematic block diagram illustrating the system configuration of a mobile station device according to the second embodiment of the present invention.
FIG. 9 is a schematic block diagram illustrating the system configuration of a base station device according to a third embodiment of the present invention.
FIG. 10A is a schematic block diagram illustrating the configuration of a multi-carrier radio transmission apparatus according to the background art of the present invention.
FIG. 10B is a schematic block diagram illustrating the configuration of a multi-carrier radio reception apparatus according to the background art of the present invention.
FIG. 11A illustrates time-domain cyclic delay transmission.
FIG. 11B illustrates frequency-domain cyclic delay transmission.
FIG. 12A illustrates a specific example of the frequency characteristics of reception signals in an OFDMA system according to the background art of the present invention when a multi-carrier radio transmission apparatus that includes two antennas and performs IFFT with the point number N=1024 performs cyclic delay transmission with the delay level difference Cd=128.
FIG. 12B illustrates a specific example of the frequency characteristics of reception signals in an OFDMA system according to the background art of the present invention when a multi-carrier radio transmission apparatus that includes two antennas and performs IFFT with the point number N=1024 performs cyclic delay transmission with the delay level difference Cd=256.

Description of Reference Numerals

| 10, 10a, | 10b, and 10c base station device |
| 11 | encoder |

| 12a and 12c | modulator |
|---|---|
| 13 and 36 | S/P converter |
| 14a, 14b, 51, and 52 | interleaver |
| 15, 54, and 58 | IFFT unit |
| 17 and 22 | GI inserter |
| 18 and 23 | D/A converter |
| 19 and 24 | radio unit |
| 20 and 25 | antenna |
| 21 | cyclic delay unit |
| 26a, | 26b, and 26c controller |
| 26, | 55, and 59 P/S converter |
| 30, | 30a, and 30b mobile station device |
| 31 | antenna |
| 32 | radio unit |
| 33 | A/D converter |
| 34 | synchronizer |
| 35 | GI remover |
| 37 | FFT unit |
| 38a, 38b, 61, and 62 | deinterleaver |
| 39 | channel estimator |
| 40 | channel compensator |
| 41 | demapper |
| 42 | P/S converter |
| 43 | decoder |
| 44 | controller |
| 50 and 60 | switch |
| 53 and 57 | multiplexer |
| 56 | phase rotator |
| 70 | subchannel processor |

BEST MODE FOR CARRYING OUT THE INVENTION

Hereinafter, embodiments of the present invention are explained with reference to accompanying drawings.

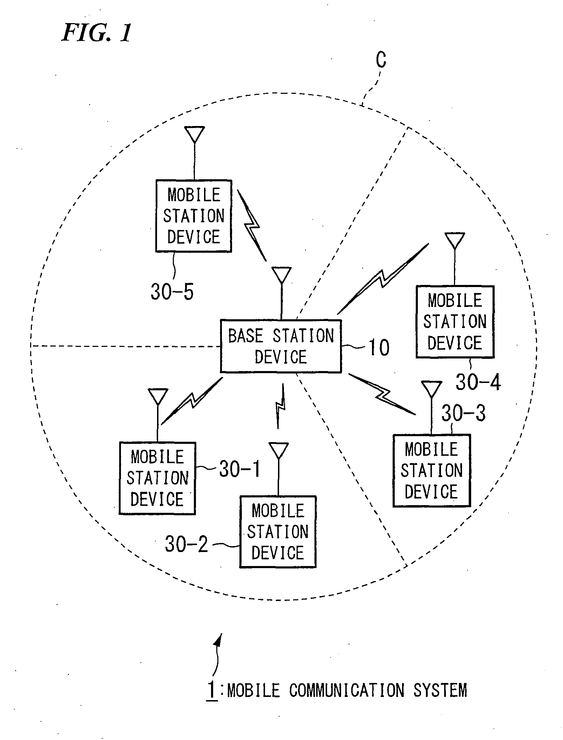

FIG. 1 illustrates the system configuration of a mobile communication system 1 according to the embodiments of the present invention.
The mobile communication system 1 includes multiple base station devices and multiple mobile station devices. One base station device 10 and five mobile station devices 30-1, 30-2, 30-3, 30-4, and 30-5 are shown in FIG. 1. Hereinafter, the mobile station devices 30-1, 30-2, 30-3, 30-4, and 30-5 are collectively called mobile station devices 30.

Each of the base station device 10 and the mobile station devices 30 mainly includes a computer including a CPU and a memory. The CPU implements at least one part of main functions according to the present embodiments by reading programs stored in the memory and executing the programs. The memory stores various programs and data including a program for implementing the present embodiments and functions as a work memory of the CPU.

The base station device 10 and each mobile station device 30 perform multi-carrier radio communication according to the OFDMA standard. In other words, the base station device 10 and each mobile station device 30 function as multi-carrier radio transmission apparatuses that wirelessly transmit transmission data using subcarrier groups each including multiple subcarriers allocated at a given frequency interval as well as multi-carrier reception apparatuses that receive the transmission data wirelessly transmitted in this manner. More specifically, a transmitter transmits transmission data to a receiver by dispersing the transmission data onto multiple frequencies (subcarriers). These subcarriers are selected from the subcarrier groups. The receiver receives the transmission data based on the multiple subcarriers selected in this manner. More specifically, the transmitter allocates, by a given amount, the transmission data to the multiple subcarriers, performs IFFT on the transmission data, and then wirelessly transmits the multiple samples obtained as the results of the IFFT.

The base station device 10 performs wireless communication simultaneously with the multiple mobile station devices 30. More specifically, the base station device 10 performs wireless communication among one or more mobile station devices 30 present in a geographical area (cell) within which electric waves can be transmitted and received. A cell C served by the base station device 10 is shown in FIG. 1. As shown in FIG. 1, each cell is divided into three substantially sectoral areas, each of which is called a sector.

The base station device 10 transmits two types of transmission data, one of which is transmission data (dedicated transmission data) to be individually transmitted to each of the mobile station devices 30, and the other of which is transmission data (broadcast transmission data) to be simultaneously transmitted to the multiple mobile station devices 30. The dedicated transmission data includes, for example, communication data and control data to be transmitted to a specific mobile station device 30. The broadcast transmission data includes, for example, control data, such as broadcast information, and communication data for broadcast communication.

Hereinafter, the configurations of the base station device 10 and the mobile station devices 30 according to the embodiments are specifically explained with transmission data to be transmitted from the base station device 10 to the mobile station devices 30 as an example.

[First Embodiment]

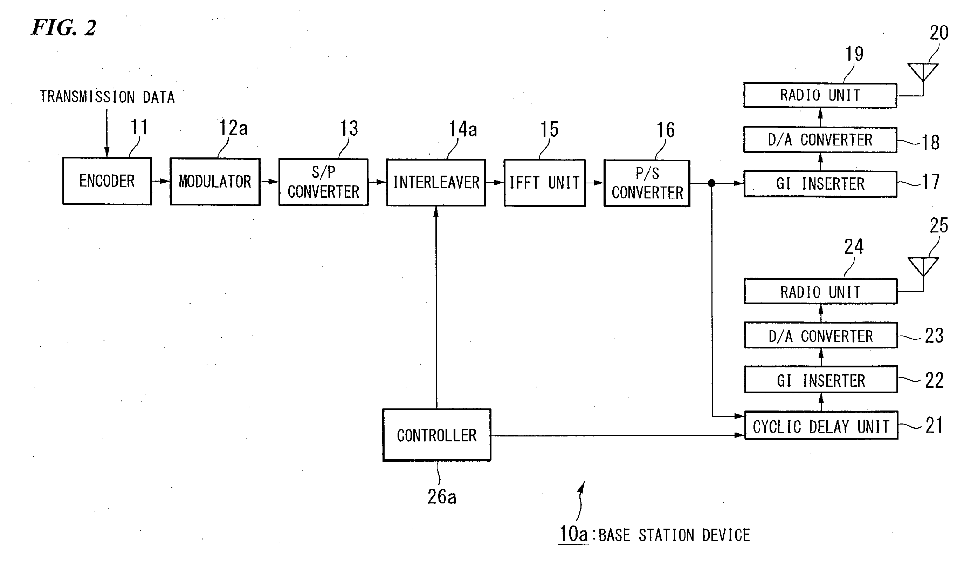

FIG. 2 is a schematic block diagram illustrating the system configuration of a base station device 10a according to a first embodiment. As shown in FIG. 2, the base station device 10a includes an encoder 11, a modulator 12a, an S/P converter 13, an interleaver 14a, an IFFT unit 15, a P/S converter 16, GI inserters 17, 22, D/A converters 18, 23, radio units 19, 24, antennas 20, 25, a cyclic delay unit 21, and a controller 26a.

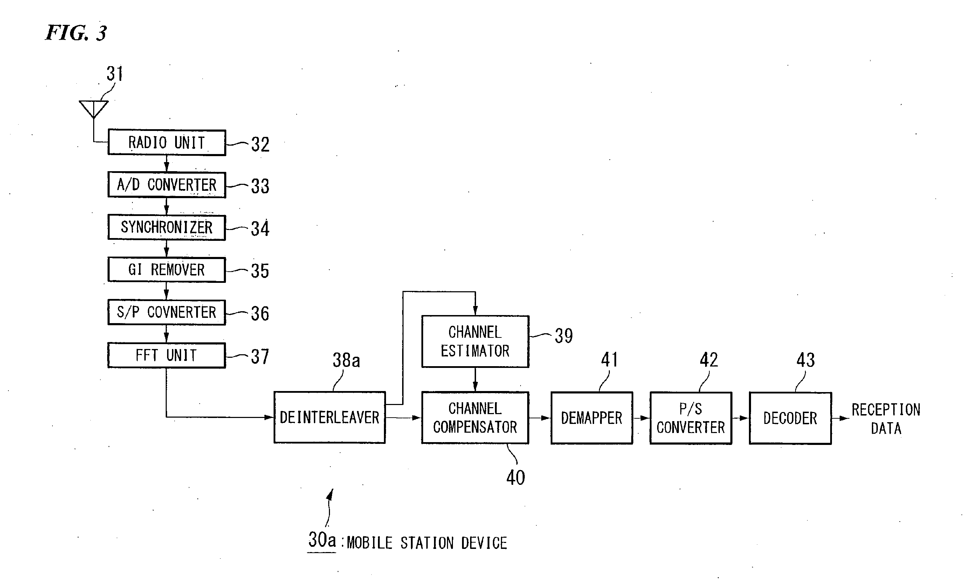

FIG. 3 is a schematic block diagram illustrating the system configuration of a mobile station device 30a according to the first embodiment. As shown in FIG. 3, the mobile station device 30a includes an antenna 31, a radio unit 32, an A/D converter 33, a synchronizer 34, a GI remover 35, an S/P converter 36, an FFT unit 37, a deinterleaver 38a, a channel estimator 39, a channel compensator 40, a demapper 41, a P/S converter 42, and a decoder 43.

The configuration of the base station device 10a is explained (FIG. 2). The encoder 11 receives dedicated transmission data or broadcast transmission data from a communication processor (not shown), and performs forward error correction on the received transmission data for each destination. The forward error correction includes, for example, Viterbi code or cyclic redundancy code. The encoder 11 performs forward error correction on the transmission data by unit modulation amount according to a modulation scheme to be used by the modulator 12a, and outputs the encoded transmission data to the modulator 12a. The transmission data to be input to the modulator 12a includes known pilot data in each frame including the given number of OFDM symbols in addition to the dedicated data and the broadcast data.

The modulator 12a obtains data symbols by modulating the unit modulation amount of the input transmission data, generates a data symbol string including data symbols each assigned the point number (the number of input points included in the IFFT unit 15 that will be explained later), and outputs the data string to the S/P converter 13. The order of the data symbols corresponds to the subcarrier number. The modulator 12a generates the data symbol string and thereby disperses the data symbols onto the respective subcarriers. In the first embodiment, the dedicated transmission data and the broadcast data are not mixed in one data symbol string generated in this manner.

The IFFT unit 15 is explained. The IFFT unit 15 includes input points, the number of which is the point number and which receive data symbols symbol by symbol. Subcarriers, the number of which is the point number and which are allocated at a given frequency interval and form subcarrier groups, are allocated to respective input points. At the respective input points, the IFFT unit 15 receives data symbols corresponding to respective subcarriers allocated to respective input points. Then, the IFFT unit 15 performs IFFT on the received data symbols. The IFFT unit 15 includes output points, the number of which is the point number and which output the same number of samples (called OFDM symbols) obtained as the results of the IFFT sample by sample.

The S/P converter 13 outputs the data symbols included in the data symbol string input from the modulator 12a in parallel to respective input points of the IFFT unit 15.

The interleaver 14a is provided between the S/P converter 13 and the IFFT unit 15 and interleaves the input points to which respective data symbols are input based on a selection rule determined by the controller 26a before the respective data symbols are really input to the input points.

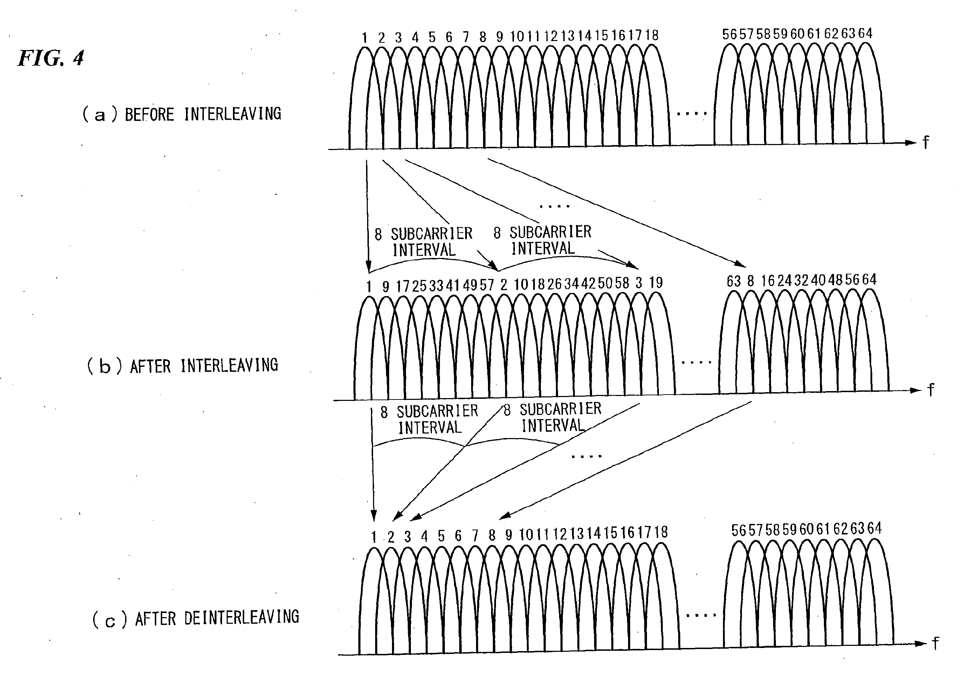

FIG. 4 illustrates an interleaving process performed by the interleaver 14a. FIG. 4 (a) illustrates the configuration of subcarriers before a selection process. FIG. 4 (b) illustrates the configuration of subcarriers after the selection process. As shown in FIG. 4, the interleaver 14a selects multiple sub carriers at every given number of data symbols (this given number is called the unit data-symbol number, which is 8 in the case of FIG. 4) from 64 subcarriers specified from the multiple subcarriers constituting the subcarrier groups. More specifically, the interleaver 14a selects multiple subcarriers at a given interval (i.e., at every unit data-symbol number of data symbols) from the 64 subcarriers.

A selection rule in this case is to move the i-th subcarrier to the $((i-f(t-1)-1)\times Is+t)$-th subcarrier where i is $1+f(t-1)$, $f(t)$, or a value between $1+f(t-1)$ and $f(t)$._ The function $f(t)$ is a recursive function such that $f(0)=0$, $f(t)=floor(f(t-1)+1+(64-t)/Is)$ where t is a nonnegative integer and floor() is a floor function.

According to this selection rule, the 1 st subcarrier before interleaving does not move by interleaving, as shown in FIGS. 4 (a) and (b). On the other hand, the 2nd subcarrier before interleaving moves to the 9th subcarrier after interleaving. The 3rd subcarrier before interleaving moves to the 17th subcarrier after interleaving. The 8th subcarrier before interleaving moves to the 57th subcarrier after interleaving.

The OFDM symbols output from the IFFT unit 15 are subjected to parallel-to-serial conversion by the P/S converter 16 and input to the GI inserter 17 and the cyclic delay unit 21. By a cyclic delay unit not being provided between the IFFT unit 15 and the GI inserter 17, the base station device 10a adds cyclic delay with delay level 0 to the OFDM symbols input to the GI inserter 17.

The GI inserter 17 adds a given GI to the OFDM symbols including the given number of input samples and outputs the resultant OFDM symbols to the D/A converter 18. The D/A converter 18 obtains an analog signal based on digital values indicative of amplitudes of the OFDM symbols and outputs the obtained analog signal to the radio unit 19. The radio unit 19 converts the input analog signal into a radio frequency band signal, and transmits the converted signal to a radio area through the antenna 20.

On the other hand, the cyclic delay unit 21 adds cyclic delay with the delay level determined by the controller 26a that will be explained later to the OFDM symbols including the given number of the input samples and outputs the resultant OFDM symbols to the GI inserter 22. The GI inserter 22 to the antenna 25 perform similar processes to those performed by the GI inserter 17 to the antenna 20. Then, an analog signal is transmitted to a radio area.

The controller 26a determines any one of a selection rule for selecting multiple subcarriers from the subcarrier groups allocated at a given frequency interval and the delay level difference indicated by the phase rotation difference for each subcarrier which is constant among adjacent subcarriers, and determines the other one based on the determined one. The controller 26a performs this determination for each determination of transmission data. If transmission data is broadcast transmission data, the destination is all of the mobile station devices 30. If transmission data is dedicated transmission data, the destination is an individual mobile station device 30.

Specifically, the controller 26a determines the delay level difference. Then, the cyclic delay unit 21 applies cyclic delay with a delay level differing by the determined delay level difference from delay level 0 to transmission data. Thereby, the controller 26a determines a selection rule according to multiple subcarriers whose reception powers degrade.

More specifically, the cyclic delay unit 21 applies cyclic delay with a delay level differing by the determined delay level difference from delay level 0 to transmission data. Thereby, the controller 26a determines the given interval according to the intervals among multiple subcarriers whose reception powers degrade, thus determining a selection rule.

More specifically, the controller 26a determines a selection rule such that the given interval Is differs from an interval calculated from Expression (12) or (13) where Cd denotes the determined delay level difference, N denotes the point number, n is a natural number, and round() denotes a function indicative of round-off to the nearest number.

$$Is=round(n \times N/Cd) \quad (0 \le Cd \le N/2) \qquad \cdots(12)$$

$$Is=round(n \times N/(N-Cd)) \quad (N/2 < Cd < N) \qquad \cdots(13)$$

By the cyclic delay unit 21 applying cyclic delay with the delay level (=Cd) differing by the delay level difference Cd from the delay level 0 to transmission data, the interval among the multiple subcarriers whose reception powers degrade is N/Cd. For this reason, the interleaver 14a might select many of subcarriers whose reception powers degrade with respect to the unit symbol number of data symbols if the interval Is defined by the above Expression is used. In this case, successive subcarriers having the low reception powers after interleaving will be present. Therefore, the controller 26a determines a selection rule so that the above given interval differs from the interval Is defmed by Expression (12) or (13). Specifically, the given interval is preferably set to round(N/Cd)/2 or round(N/Cd)/4.

The controller 26a determines a delay level based on the delay level difference determined in the above manner and a reference delay level (delay level 0 in this case), and outputs the determined delay level to the cyclic delay unit 21. Additionally, the controller 26a outputs selection rule information indicative of the determined selection rule to the interleaver 14a. Preferably, the controller 26a uses the given interval as the selection rule information.

The cyclic delay unit 21 applies cyclic delay with the delay level input from the controller 26a to the OFDM symbols input from the IFFT unit 15, and outputs the resultant OFDM symbols to the GI inserter 22.

Additionally, the interleaver 14a interleaves the input points to which the S/P converter 13 inputs respective data symbols based on the selection rule indicated by the selection rule information input by the controller 26a. Consequently, the interleaver 14a and the controller 26a function as a selection unit that selects, for each of the unit symbol number of data symbols, multiple subcarriers from the subcarrier groups based on the delay level determined by the controller 26a.

If the cyclic delay level determined by the controller 26a and the intervals among the subcarriers to be interleaved are set to be constant, the subcarrier selection rule information (selection information indicative of multiple subcarriers selected by the selection unit) does not need to be indicated from the base station device 10a to the mobile station device 30a, thereby achieving the frequency diversity effect. The controller 26a may perform the determination at a given time interval (for example, at each frame), include selection rule information in transmission data, and transmit the transmission data to the mobile station device 30a. When the transmission data including the selection rule information is transmitted, the base station device 10a preferably controls the interleaver 14a to select subcarriers using a preliminarily determined selection rule or controls the interleaver 14a so as not to perform interleaving, so that the mobile station device 30a can reliably receive the selection rule information.

Hereinafter, the configuration of the mobile station device 30a is explained (FIG. 3). The antenna 31 receives an analog signal that the base station device 10a has transmitted to a radio area in the above manner and outputs the received analog signal to the radio unit 32. The radio unit 32 coverts the input analog signal into a baseband signal that can be analog-to-digital converted and outputs the converted signal to the A/D converter 33. The A/D converter 33 converts the input analog signal to the digital signal and outputs the converted signal to the synchronizer 34. The synchronizer 34 synchronizes symbols based on the input digital signal and outputs the synchronized symbols to the GI remover 35 symbol by symbol. Thus, the digital signal input to the GI remover 35 indicates the OFDM symbols.

The GI remover 35 removes a GI added to the OFDM symbols and outputs the OFDM symbols with the GI removed to the S/P converter 36.

The FFT unit 37 includes input points, the number of which is the point number and which receive inputs sample by sample and the same number of output points that output data symbol strings symbol by symbol obtained by performing FFT on the point number of the input samples.

The S/P converter 36 outputs the samples included in the input OFDM symbols in parallel to the respective input points of the FFT unit 37.

The FFT unit 37 outputs the data symbol strings to the deinterlever 38a. The deinterleaver 38a obtains the selection rule information (selection information) from the transmission data transmitted from the base station device 10a. Then, the deinterleaver 38a deinterleaves the output points from which respective data symbol strings are output based on the inverse rule of the selection rule indicated by the selection rule information.

Referring back to FIG. 4, data symbol strings obtained as the result of deinterleaving by the deinterleaver 38a are explained. FIG. 4 (c) illustrates the configuration of subcarriers after deinterleaving. As shown in FIG. 4 (c), the deinterleaver 38a returns the positions of the input data symbols to the original positions at which the S/P converter 13 has input the data symbols to the interleaver 14a.

The channel estimator 39 extracts one or more data symbols indicative of the pilot data from the input data symbol strings and estimates the channel characteristics based on the extracted data symbols. Then, the channel estimator 39 outputs channel estimation values obtained as the estimation result to the channel compensator 40.

The channel compensator 40 compensates channel variation of the data symbol strings input from the FFT unit 37 and outputs the resultant data symbol strings to the demapper 41.

The demapper 41 obtains communication data for each data symbol by demodulating each of the input data symbols and outputs the communication data to the P/S converter 42. Although the processes so far are performed in parallel, the P/S converter 42 serially outputs the communication data for each of the data symbols input in parallel to the decoder 43 in a given order. The decoder 43 performs error correction decoding and restoring on a series of the input communication data.

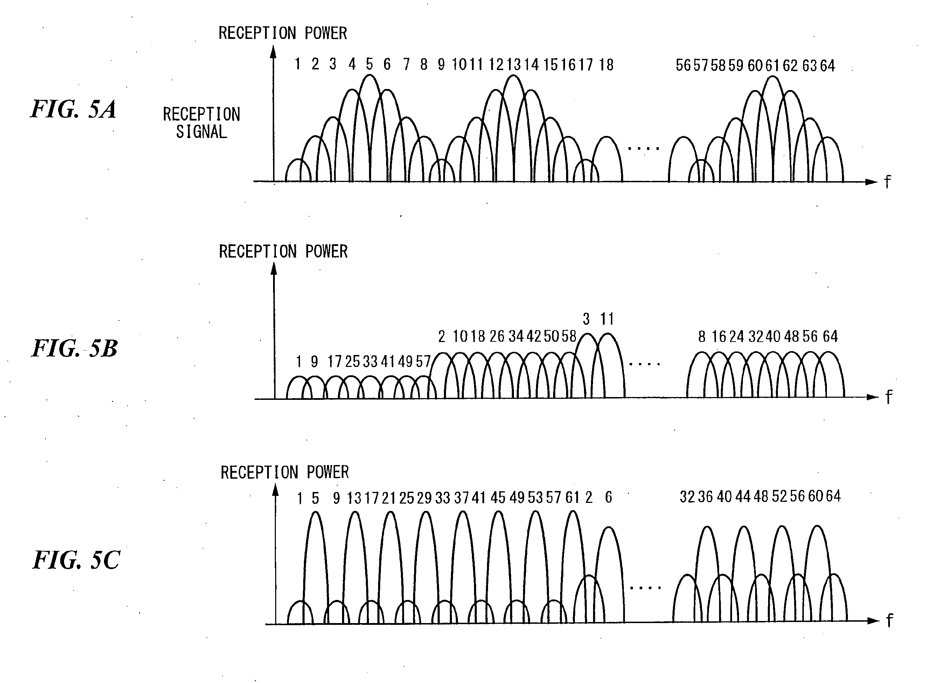

The effects achieved by the above processes are explained with reference to specific examples. FIGS. 5A, 5B, and 5C illustrate the cases where the point number N=1024, and transmission data is wirelessly transmitted from the antenna 25 with a delay level (delay level=128) differing by the delay level difference Cd=128 from the delay level 0 (corresponding to transmission from the antenna 20). The vertical axis denotes the reception power of each subcarrier.

FIG. 5A illustrates the reception powers of subcarriers received by the mobile station device 30. As shown in FIG. 5A, the reception powers of reception signals degrade at 8 (=N/Cd) subcarrier interval after cyclic delay transmission. In this case, FIG. 5B illustrates the reception powers of subcarriers that have been interleaved at the 8 subcarrier interval (selection of subcarriers) and then deinterleaved. FIG. 5C illustrates the reception powers of subcarriers that have been interleaved at the 4 subcarrier interval (selection of subcarriers) and then deinterleaved.

As shown in FIG. 5B, successive subcarriers whose reception powers degrade are present after deinterleaving if interleaving has been performed at the 8 subcarrier interval. In other words, the reception powers of the first to eighth successive data symbols have degraded. In this state, error correction might not be effectively performed even if the decoder 43 performs error correction decoding. In other words, channel quality degrades by performing both interleaving and cyclic delay transmission.

On the other hand, as shown in FIG. 5C, subcarriers whose reception powers degrade after deinterleaving disperse if interleaving has been performed at the 4 subcarrier interval. In this case, even if some subcarriers cannot be received, there is a high possibility that the entire transmission data will be restored by error correction decoding based on the transmission data received by other subcarriers. In other words, a degradation of channel quality is prevented by performing both interleaving and cyclic delay transmission.

In the case of FIG. 5C, the controller 26a determines a selection rule such that the interleaving at the round(n×N/Cd)=8n subcarrier interval is not performed, and therefore the state of FIG. 5B does not occur. In other words, subcarriers whose reception powers degrade disperse and a degradation of channel quality is prevented.

The unit symbol number is 8 in the case of FIG. 5B and 16 in the case of FIG. 5C. Thus, the unit symbol number may also be changed according to a subcarrier interval for interleaving when the subcarrier interval is changed. Consequently, a subcarrier interval for interleaving can be changed without changing a range of subcarriers to be selected (64 subcarriers in the cases of FIGS. 5B and 5C).

In another case, a range of subcarriers to be selected may be changed according to a subcarrier interval for interleaving. Although the interleaver 14a selects multiple subcarriers at a given interval from 64 subcarriers in the cases of FIGS. 5B and 5C, for example, the interleaver 14a may select multiple subcarriers at a given interval from 32 subcarriers in the case of FIG. 5C. Consequently, a subcarrier interval for interleaving can be changed without changing the unit symbol number.

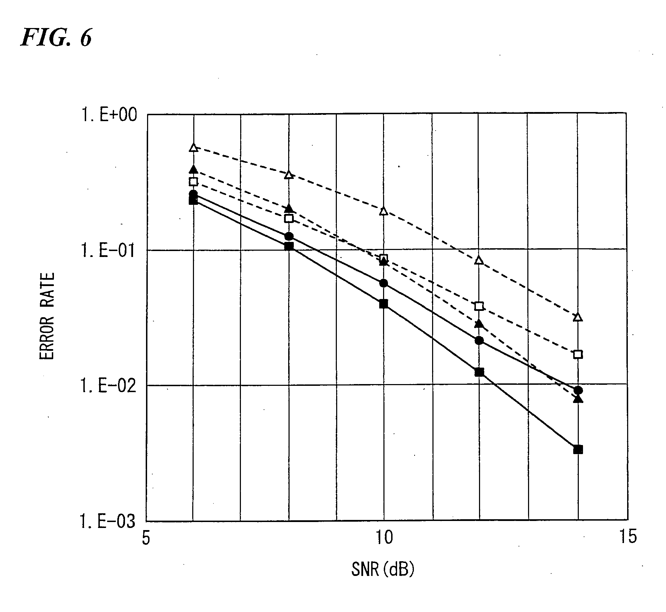

FIG. 6 illustrates the computer simulation results showing the effect of preventing a degradation of channel quality. FIG. 6 illustrates the result of a computer simulation where the point number N=1024, the modulation scheme used by the modulator 12a is QPSK (Quadrature Phase Shift Keying) with an encoding rate R=1/2, the delay level difference Cd=128, channel delay dispersion=30 nsec. In this case, the controller 26a determines a selection rule so that interleaving at round(n×1024/128)=8n subcarrier interval is not performed.

In FIG. 6, the case where interleaving is not performed is indicated by a dotted line and outline squares. The case of interleaving at 16 subcarrier interval is indicated by a dotted line and black triangles. The case of interleaving at 8 subcarrier interval is indicated by a dotted line and outline triangles. The case of interleaving at 4 subcarriers is indicated by a full line and black squares. The case of interleaving at 2 subcarriers is indicated by a full line and black circles. As shown in FIG. 6, the error rate to SNR (Signal to Noise Ratio) degrades in the case of interleaving at 8 subcarrier interval compared with the case of no interleaving. The error rate to SNR in the case of interleaving at 16 subcarrier interval is substantially the same as that in the case of no interleaving. On the other hand, the error rate to SNR improves in the case of interleaving at 2 or 4 subcarrier interval compared with the case of no interleaving.

As explained above, the base station device 10a can prevent a degradation of channel quality by performing both interleaving and cyclic delay transmission.

Additionally, the forward error correction is used. Thereby, even if some subcarriers cannot be received, the mobile station device 30a can compensate the data that cannot be received using data that can be received by other subcarriers.

Further, the controller 26a can prevent multiple subcarriers selected by the interleaver 14a at each unit symbol number of data symbols from being identical to multiple subcarriers whose reception powers degrade after cyclic delay transmission. More specifically, the controller 26a can prevent intervals among multiple subcarriers selected by the interleaver 14a at each unit symbol number of data symbols from being identical to those among multiple subcarriers whose reception powers degrade after cyclic delay transmission.

Moreover, the reception powers of subcarriers degrade at an interval corresponding to a period N/Cd when cyclic delay transmission is performed, as explained above. According to the above configuration, the given interval Is can be set not to be a substantially integral multiple of the period N/Cd. Thereby, the controller 26a can prevent intervals among multiple subcarriers selected by the interleaver 14a at each unit symbol number of data symbols from being identical to those among subcarriers whose reception powers degrade after the cyclic delay transmission.

Although it has been explained in the first embodiment that the base station device 10a includes two transmission systems therein, a degradation of channel quality can be prevented by performing both interleaving and cyclic delay transmission similarly to the above processes, even if the base station device 10a includes more than two transmission systems therein. The detail thereof is explained hereinafter.

If the base station device 10a includes m+1 transmission systems, the controller 26a obtains m pieces of the delay level differences $Cd_{1,2,\ldots,m}$. Then, a given interval Is which is not identical to the least common multiple of the m pieces of $Is_k$ calculated by Expressions (14) and (15) where k=1~m.

$$Is_k = round(n \times N/Cd_k) \quad (0 \leq Cd \leq N/2) \qquad \cdots (14)$$

$$Is_k = round(n \times N/(N-Cd_k)) \quad (N/2 < Cd < N) \qquad \cdots (15)$$

The interleavers 14a interleaves the input points of the IFFT unit 15 to which data symbols are input according to a selection rule based on the determined given interval Is before the data symbols are really input.

Further, m pieces of the transmission systems from the cyclic delay unit 21 to the antenna 25 are provided.

Then, wireless transmission is performed by the cyclic delay unit 21 belonging to the m-th transmission system applying cyclic delay with a delay level (=$Cd_k$) differing by the delay level difference $Cd_k$ from the delay level 0 corresponding to the wireless transmission performed by the transmission system from the GI inserter 17 to the antenna 20 (reference transmission system).

As explained above, even in the case of more than two transmission systems being included, a degradation of channel quality can be prevented by performing both interleaving and cyclic delay transmission in a similar manner.

Although the case where a selection rule is determined after a delay level is determined has been explained in the first embodiment, the order of those determinations may be reversed. In this case, the controller 26a determines a selection rule first, and then determines a delay level based on multiple subcarriers selected by the interleaver 14a if the selection rule is satisfied. Specifically, the controller 26a determines a given interval Is first, determines the delay level difference different from Cd obtained by inverse calculation of Expressions (12) and (13), and then determines a delay level based on the delay level difference. Also in this manner, a degradation of channel quality can be prevented by performing both interleaving and cyclic delay transmission.

[Second Embodiment]

A second embodiment explains the case where two different delay level differences between dedicated transmission data and broadcast transmission data are used. Similar to the first embodiment, it is assumed in the second embodiment that dedicated transmission data and broadcast transmission data are not mixed in one data symbol string.

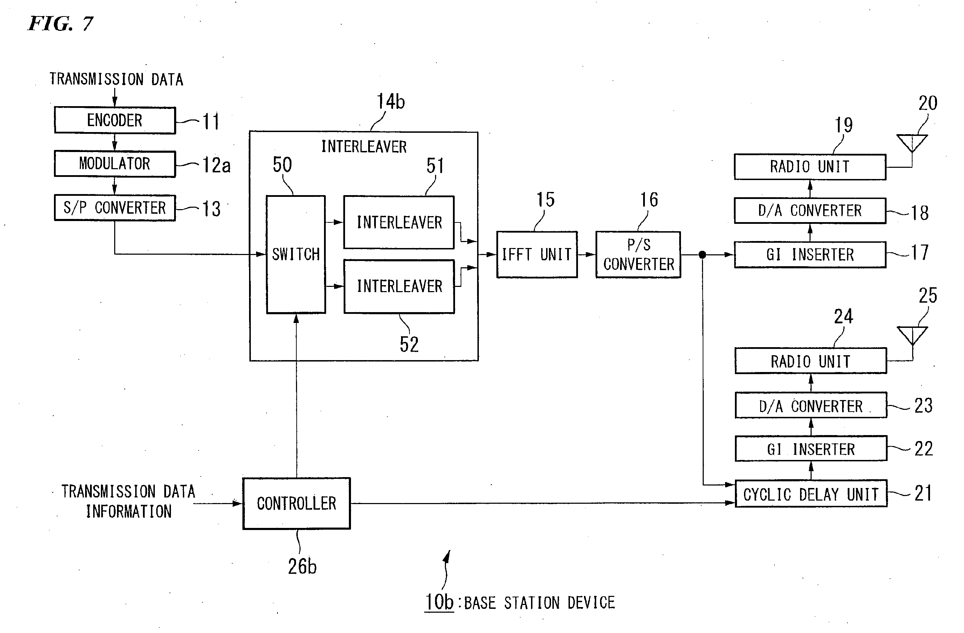

FIG. 7 is a schematic block diagram illustrating the system configuration of a base station device 10b according to the second embodiment. As shown in FIG. 7, the base station device 10b has the same configuration as that of the base station device 10a except for an interleaver 14b and a controller 26b added in place of the interleaver 14a and the controller 26a of the base station device 10a. As shown in FIG. 7, the interleaver 14b includes a switch 50 and interleavers 51, 52.

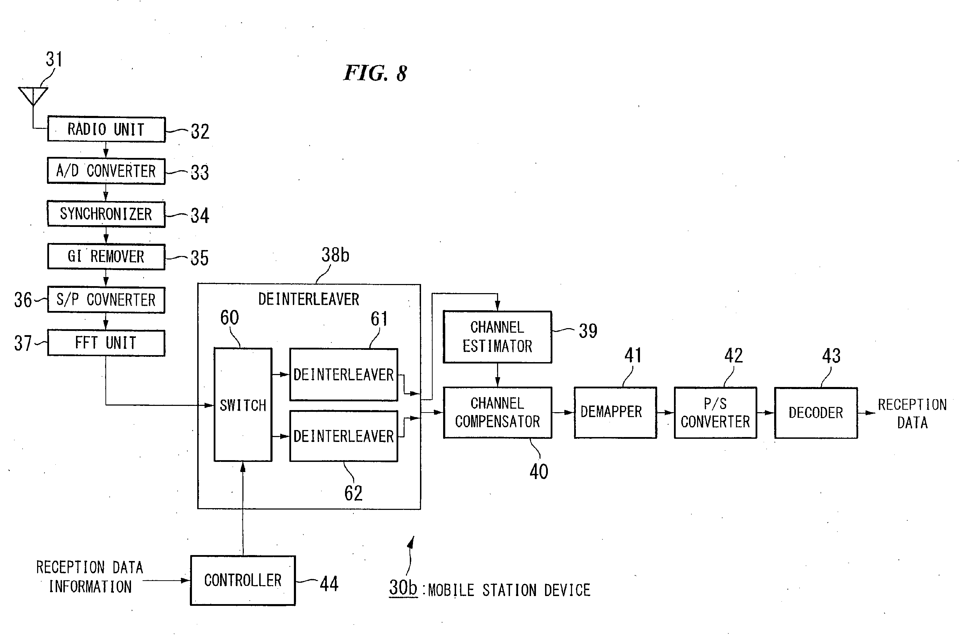

FIG. 8 is a schematic block diagram illustrating the system configuration of a mobile station device 30b according to the second embodiment. As shown in FIG. 8, the mobile station device 30b has the same configuration as that of the mobile station device 30a except for a deinterleaver 38b added in place of the deinterleaver 38a of the mobile station device 30a and a controller 44 further included. As shown in FIG. 8, the deinterleaver 38b includes a switch 60 and deinterleavers 61, 62.

Hereinafter, the interleaver 14b, the controller 26b, the deinterleaver 38b, and the controller 44 are explained.

The controller 26b (FIG. 7) receives, for each data symbol string, transmission data information indicating whether the data symbol string is dedicated transmission data or broadcast transmission data from a communication processor (not shown). Based on the transmission data information, the controller 26b determines whether the transmission data included in the data symbol strings output from the S/P converter 13 is dedicated transmission data or broadcast transmission data. Based on the determination result, the controller 26b determines whether or not to perform cyclic delay transmission. Then, the controller 26b determines the delay level difference for each data symbol string based on the determination result. Then, the controller 26b determines a selection rule for each data symbol string based on the determined delay level difference. Specifically, the controller 26b determines the selection rule using Expressions (12) and (13).

Particularly in the second embodiment, the controller 26b determines not to perform cyclic delay transmission on data symbol strings including dedicated transmission data. If it is assumed in this case that the delay level difference determined by the controller 26b is $Cd_A$, $Cd_A=0$. Then, the controller 26b determines a selection rule $S_A$ according to the delay level difference $Cd_A$. Since the interval Is becomes infinite as understood from Expression (12) in this case, another value (i.e., a selection rule based on an adequate interval of subcarriers) is determined.

On the other hand, the controller 26b determines to perform cyclic delay transmission on data symbol strings including broadcast transmission data. If it is assumed in this case that the delay level difference determined by the controller 26b is $Cd_B$, the controller 26b determines a selection rule $S_B$ according to the delay level difference $Cd_B$.

The controller 26b outputs the delay level difference $Cd_A$ or $Cd_B$ determined in this manner to the cyclic delay unit 21. Additionally, the controller 26b outputs selection rule information indicative of the selection rule $S_A$ or $S_B$ to the interleaver 14b.

The interleavers 51 and 52 are configured to perform interleaving based on respective selection rules different from each other. Here, it is assumed that the interleavers 51 and 52 perform interleaving based on the selection rules $S_A$ and $S_B$, respectively. Based on the respective selection rules, the interleavers 51 and 52 interleave the input points of the IFFT unit 15 to which data symbols are input before the data symbols are really input.

The switch 50 outputs data symbol strings input from the S/P converter 13 to the interleaver 14b to the interleaver 51 or 52 based on the selection rule information input from the controller 26b.

In this manner, the two delay level differences which differ between the dedicated transmission data and broadcast transmission data are used.

The controller 44 (shown in FIG. 8) determines whether the received transmission data is dedicated transmission data or broadcast transmission data. Based on the determination result, the controller 44 determines the delay level difference applied to the transmission data by the base station device 10b for each data symbol string. This determination is performed based on the similar processing standard to that of the controller 26b. The determined delay level difference becomes $Cd_A$ or $Cd_B$. Based on the determined delay level difference, the controller 44 determines the selection rule $S_A$ or $S_B$ and outputs selection rule information indicative of the determined selection rule to the switch 60. This determination is also performed based on the similar processing standard to that of the controller 26b.

The deinterleavers 61 and 62 are configured to perform different deinterleaving. Here, it is assumed that the deinterleavers 61 and 62 perform deinterleaving based on the inverse rules of the selection rules $S_A$ and $S_B$, respectively. Consequently, the deinterleavers 61 and 62 deinterleave the output points from which data symbol strings are output based on the respective rules.

The switch 60 outputs the data symbol strings output from the FFT unit 37 to the deinterleaver 61 or 62 based on the selection rule information input from the controller 44.

As explained above, the base station device 10b can use two delay level differences different between dedicated transmission data and broadcast transmission data. Additionally, the base station device 10b can determine whether or not to perform cyclic delay transmission based on the type of transmission data and determine the delay level difference and a selection rule based on the determination result. Accordingly, a degradation of channel quality can be prevented by performing both interleaving and cyclic delay transmission.

Although it has been explained in the second embodiment that two delay level differences are used, more than two delay level differences may be used. In this case, the interleaver 14b has to include more than two interleavers, and the deinterleaver 38b has to include more than two deinterleavers. Thereby, the delay level difference subdivided based on channel conditions as well as the two delay level differences according to the type of transmission data can be used.

[Third Embodiment]

A third embodiment explains the case where dedicated transmission data and broadcast transmission data are mixed for each subchannel in one data symbol string.

If the type of transmission data differs for each subchannel, the delay level difference is made to differ for each subcannel, which is implemented by frequency-domain cyclic delay transmission. Different from the first and second embodiments, frequency-domain cyclic delay transmission is used in the third embodiment.

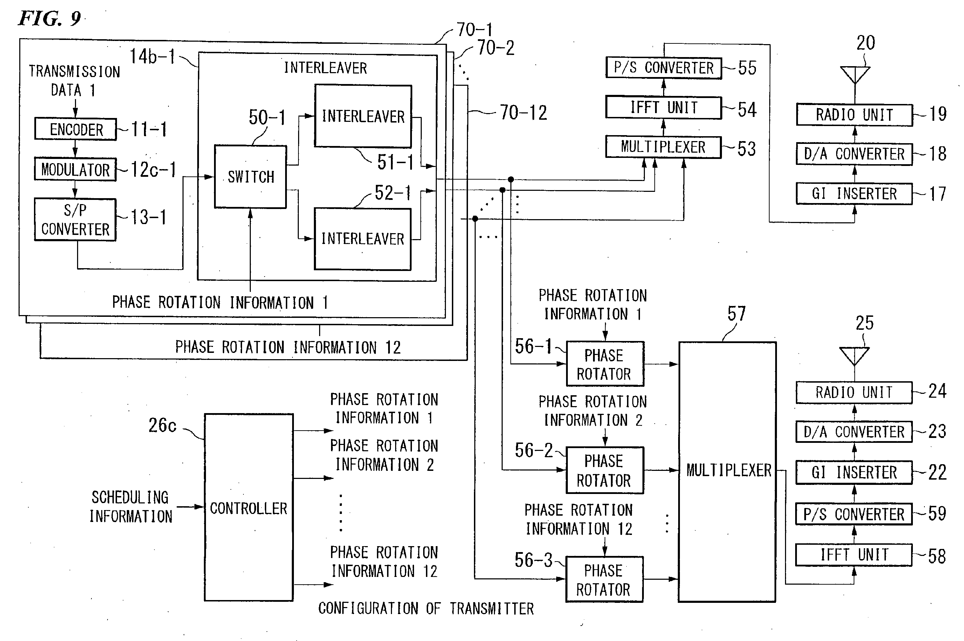

FIG. 9 is a schematic block diagram illustrating the system configuration of a base station device 10c according to the third embodiment. As shown in FIG. 9, the base station device 10c includes multiple subchannel processors (12 pieces in this case) 70. Each of the subchannel processors 70 includes the encoder 11, the S/P converter 13, and the interleaver 14b, which are included in the base station device 10b, and modulator 12c. Additionally, the base station device 10c includes a controller 26c in place of the controller 26b of the base station device 10b. Further, the base station device 10c includes IFFT units 54 and 58, and P/S converters 55 and 59, in place of the IFFT unit 15 and the P/S converter 16 of the base station device 10b. Moreover, the base station device 10c includes phase rotators 56 for respective subchannels in place of the cyclic delay unit 21. Additionally, the base station device 10c includes the multiplexers 53 and 56.

Hereinafter, the modulator 12c, the controller 26c, the IFFT units 54 and 58, the P/S converters 55 and 59, the phase rotator 56, the multiplexers 53 and 57 are explained. Hereinafter, subchannels included in a data symbol string are called blocks.

A communication processor (not shown) allocates one or more blocks to each destination of transmission data. Then, the transmission data is input to the subchannel processor 70 corresponding to the block allocated to the transmission data.

The modulator 12c obtains data symbols by modulating the modulation unit amount of transmission data input from the encoder 11, generates a data symbol string including data symbols which constitute subchannels and are ordered, and outputs the data symbol string to the S/P converter 13.

The multiplexer 53 generates a data symbol string by multiplexing the data symbol strings output from the respective subchannel processors 70 in a given order, and outputs the multiplexed data symbol string to the IFFT unit 54. Consequently, in the third embodiment, dedicated transmission data and broadcast transmission data are occasionally mixed in each block of one data symbol string.

The controller 26c receives, for each block, information indicating which of dedicated transmission data and broadcast transmission data is included in the block (called scheduling information) from a communication processor (not shown). Based on the scheduling information, the controller 26c determines, for each block, which of dedicated transmission data, broadcast transmission data, and pilot data is included in the block, and then determines whether to perform cyclic delay transmission based on the result of the determination (cyclic delay transmission determining unit). Based on the determination result, the controller 26c determines the delay level difference for each block. Based on the determined delay level difference, the controller 26c determines a selection rule for each block. Specifically, the controller 26c determines a selection rule using Expressions (12) and (13).

In the third embodiment, the controller 26c determines not to perform cyclic delay transmission for blocks including dedicated transmission data. If it is assumed that the delay level difference determined by the controller 26c is $Cd_A$ in this case, $Cd_A=0$. Then, the controller 26c determines a selection rule $S_A$ based on the delay level difference $Cd_A$.

On the other hand, the controller 26c determines to perform cyclic delay transmission for blocks including broadcast transmission data. If it is assumed that the delay level difference determined by the controller 26c is $Cd_B$, $Cd_B \neq 0$. Then, the controller 26c determines a selection rule $S_B$ based on the delay level difference $Cd_B$.

The controller 26c calculates the phase rotation difference for each data symbol (hereinafter, called the inter-antenna phase rotation difference) based on the delay level difference $Cd_A$ or $Cd_B$ determined in this manner, and outputs the phase rotation level determined based on the inter-antenna phase rotation difference to each of the phase rotators 56.

Specifically, the controller 26c calculates the inter-antenna phase rotation difference $2\pi n Cd_A/N$ or $2\pi n Cd_B/N$ with respect to each data symbol $d_n$, and outputs the phase rotation level differing by the inter-antenna rotation difference from the phase rotation level 0 to the corresponding phase rotator 56. Additionally, the controller 26c outputs the determined selection rule $S_A$ or $S_B$ to the interleaver 14b.

Hereinafter, the relationship between the phase rotation difference among adjacent subcarriers and a selection rule is explained. As explained above, the phase rotation difference among the adjacent subcarriers θ is $\theta_i = 2\pi Cd/N$. With use of this, Expressions (12) and (13) can be transformed as Expression (16) where i is the subchannel number such that $-\pi < \theta_i < 0$ and $0 < \theta_i \leq \pi$

$$\mathrm{Is} = \mathrm{round}|n \times 2\pi/\theta_i| \qquad \cdots (16)$$

The controller 26c may determine a selection rule for each block so that the given interval Is differs from that calculated by Expression (16) where the calculated phase rotation difference among adjacent subcarriers is $\theta_i$, and n is a natural number.

The phase rotators 56 are provided for respective subchannels. In this case, 12 phase rotators 56 corresponding to 12 subchannels are provided. Each phase rotator 56 receives data symbols included in the data symbol string output from the corresponding subchannel processor 70 corresponding to the same subchannel. Then, the phase rotator 56 adds phase rotation with the phase rotation level input from the controller 26c to the received data symbols and outputs the resultant data symbols to the multiplexer 57.

The multiplexer 57 generates a data symbol string based on the data symbols input from the respective phase rotators 56 in a similar manner as the multiplexer 53, and outputs the generated data symbol string to the IFFT unit 58.

Similar to the IFFT unit 15, the IFFT units 54 and 57 include input points, the number of which is the point number and which receive respective data symbols from the S/P converter 13. Then, the IFFT units 54 and 57 perform IFFT on the same number of the input data symbols to obtain OFDM symbols. The IFFT units 54 and 57 include output points, each of which is the point number and which output the obtained OFDM symbols sample by sample. The P/S converters 55 and 59 perform parallel-to-serial conversion on the OFDM symbols output from the IFFT units 54 and 57, and output the converted symbols to the GI inserters 17 and 22, respectively.

As explained above, the base station device 10c can determine whether to perform cyclic transmission for each block based on the type of transmission data. Based on the determination result, the base station device 10c can determine the delay level difference and a selection rule for each block. Accordingly, the base station device 10c can prevent a degradation of channel quality by performing both interleaving and cyclic delay transmission.

The present invention is not limited to the above embodiments. If multiple base stations 10 are present, for example, the delay level difference may be uniquely determined for each base station device 10. As shown in FIG. 1, a cell served by the base station 10 is divided into multiple sectors, and the delay level difference may be uniquely determined for each sector. Consequently, the delay level difference or a selection rule can be included in broadcast transmission data to be transmitted in the cell or each sector so that the delay level difference or the selection rule can be indicated to the mobile station device 30. Although the delay level is set to 0 for one of the multiple transmission systems and the delay levels for other transmission systems are determined with the delay level 0 as a reference, the delay level for a transmission system to be a reference may not be set to 0. In this case, the delay levels for other transmission systems differ by the determined delay level differences from the delay level for the transmission system to be the reference.

Additionally, programs for implementing functions of the base station device 10 and the mobile station 30 may be stored in a computer readable recording medium so that the above processes are performed by a computer system reading and executing the programs stored therein.

The "computer system" may include OS or hardware, such as peripheral devices. If the "computer system" uses a WWW system, the "computer system" includes home page provision environments (or display environments). '

The "computer readable recording medium" includes a nonvolatile memory such as a flexible disk, a magnetic optical disk, a ROM, or a flash memory, a portable medium such as a CD-ROM, or a storage device such as a hard disk.

Additionally, the "computer readable recording medium" includes one temporarily storing a program, such as a volatile memory (for example, DRAM (Dynamic Random Access Memory)) included in a computer system to be a server or a client when a program is transmitted through a network such as the Internet or a communication line such as a telephone line.

Further, the program may be transmitted from the computer system storing the program in, for example, a storage device, to another computer system through a transmission medium or carriers therein. The "transmission medium" for transmitting a program is a medium having a function of transmitting information, for example, a network such as the Internet or a communication line such as a telephone line.

Moreover, the program may be one for implementing a part of the explained functions. Additionally, the program may be one for implementing each of the explained functions with other programs preliminarily stored in the computer system, i.e., a difference file (difference program).

INDUSTRIAL APPLICABILITY

The present invention is suited to the aforementioned mobile communication system, but not limited thereto.

**Claims**

1. A multi-carrier radio transmission apparatus that perform wireless communication using a subcarrier group including a plurality of subcarriers allocated at a given frequency interval, the multi-carrier radio transmission apparatus comprising:

    a selection unit that selects a plurality of subcarriers from the subcarrier group based on a delay level difference indicated by a phase rotation difference for each of the subcarriers, which differs by a constant value among the subcarriers adjacent to one another; and
    a radio transmission unit that sequentially receives transmission data, disperses the transmission data onto the subcarriers selected, wirelessly transmits the transmission data by applying cyclic delay with a delay level 0 or a given delay level greater than the delay level 0 to the transmission data, and the transmission data by applying cyclic delay with a delay level differing by the delay level difference from the given delay level to the transmission data.

2. The multi-carrier radio transmission apparatus according to claim 1, further comprising
    an encoder that performs given forward error correction on the transmission data, wherein
    the radio transmission unit wirelessly transmits the transmission data subjected to the forward error correction performed by the encoder.

3. The multi-carrier radio transmission apparatus according to claim 1 or 2, wherein the selection unit selects the subcarriers according to a plurality of subcarriers whose reception powers degrade after the radio transmission unit applies the cyclic delay to the transmission data.

4. The multi-carrier radio transmission apparatus according to claim 1 or 2, wherein the selection unit selects, from the subcarrier group, the subcarriers at a given interval according to an interval at which a plurality of subcarriers whose reception powers degrade after the radio transmission unit applies the cyclic delay to the transmission data are allocated.

5. The multi-carrier radio transmission apparatus according to claim 4, wherein the given interval differs from an interval Is calculated using the following expressions:

$$Is=round(n \times N/Cd) \text{ for } Cd \text{ such that } 0 \leq Cd \leq N/2;$$

and

$$Is = round(n \times N/(N-Cd)) \text{ for } Cd \text{ such that } N/2 < Cd < N,$$

where Cd is the delay level difference, N is the number of subcarriers included in the subcarrier group, and n is a natural number.

6. The multi-carrier radio transmission apparatus according to claim 2, wherein:

the transmission data comprises dedicated transmission data to be individually transmitted to each of a plurality of multi-carrier radio reception apparatuses;
the encoder performs forward error correction for each of the multi-carrier radio reception apparatuses on the dedicated transmission data; and
the selection unit selects the subcarriers for each of the multi-carrier radio reception apparatuses based on the delay level difference for each of the multi-carrier radio reception apparatuses.

7. The multi-carrier radio transmission apparatus according to any one of claims 1 to 5, wherein:

the transmission data comprises dedicated transmission data to be individually transmitted to each of a plurality of multi-carrier radio reception apparatuses and broadcast transmission data to be simultaneously transmitted to the multi-carrier radio reception apparatuses;
the multi-carrier radio transmission apparatus further comprises a cyclic-delay-transmission determining unit that determines whether or not to perform cyclic delay transmission based on whether the transmission data is the dedicated transmission data or the broadcast transmission data; and
the delay level difference is determined by a result of the determination performed by the cyclic-delay-transmission determining unit.

8. The multi-carrier radio transmission apparatus according to any one of claims 1 to 7, wherein
the selection unit selects the subcarriers based on the delay level difference for each of subchannels each including a given number of subcarrier groups, and
the radio transmission unit applies the cyclic delay to the transmission data by applying phase rotation with phase rotation level indicated by the delay level for each of the subchannels.

9. A multi-carrier radio transmission apparatus, comprising:

a selection unit that selects a plurality of subcarriers at a given interval from a subcarrier group including a plurality of subcarriers allocated at a given frequency interval;
a delay-level-difference obtaining unit that obtains m delay level differences $Cd_{1, 2, ..., m}$ indicated by phase rotation differences for respective subcarriers, which differ by a constant value among the subcarriers adjacent to one another, m being equal to or greater than one;
a reference radio transmission unit that disperses transmission data onto the subcarriers selected, and wirelessly transmits the transmission data by applying cyclic delay with a delay level 0 or a given delay level greater than the delay level 0 to the transmission data; and
a k-th wireless transmission unit that disperses transmission data onto the subcarriers selected, and wirelessly transmits the transmission data by applying cyclic delay with a delay level differing by the delay level difference $Cd_k$ obtained by the delay-level-difference obtaining unit from the given delay level for the wireless transmission performed by the reference radio transmission unit, k being any one of 1 to m, wherein
the given interval differs from a least common multiple of m pieces of intervals $Is_k$ calculated using the following expressions:

$$Is_k = round(n \times N/Cd_k) \text{ for } Cd \text{ such that } 0 \leq Cd \leq N/2;$$

and

$$\mathrm{Is}_k = \mathrm{round}(n \times N/(N - \mathrm{Cd}_k)) \text{ for Cd such that } N/2 < \mathrm{Cd} < N,$$

where N is the number of subcarriers included in the subcarrier group, and n is a natural number.

10. A multi-carrier transmission apparatus, comprising:

a selection unit that selects a plurality of second subcarriers from a subcarrier group including a plurality of first subcarriers allocated at a given frequency interval;
a determining unit that determines, based on the second subcarriers selected, a delay level difference indicated by a phase rotation difference for each of the second subcarriers, which differs by a constant value among the second subcarriers adjacent to one another; and
a radio transmission unit that sequentially receives transmission data, disperses the transmission data onto the second subcarriers selected, wirelessly transmits the transmission data by applying cyclic delay with a delay level 0 or a given delay level greater than the delay level 0 to the transmission data, and the transmission data by applying cyclic delay with a delay level differing by the delay level difference from the given delay level to the transmission data.

11. A multi-carrier radio reception apparatus that receives the transmission data wirelessly transmitted by the multi-carrier transmission apparatus according to any one of claims 1 to 10, wherein
the multi-carrier radio reception apparatus receives the transmission data based on the subcarriers selected by the selection unit.

12. A multi-carrier radio communication system, comprising:

the multi-carrier radio transmission apparatus according to any one of claims 1 to 10; and
a multi-carrier radio reception apparatus that receives the transmission data wirelessly transmitted by the multi-carrier radio transmission apparatus, wherein
the multi-carrier radio transmission apparatus transmits selection information indicative of the subcarriers selected by the selection unit to the multi-carrier radio reception apparatus, and
the multi-carrier radio reception apparatus receives selection information and receives the transmission data based on the selection information received.

13. A multi-carrier radio transmission method for radio transmission using a subcarrier group including a plurality of subcarriers allocated at a given frequency interval, comprising:

a selection step of selecting a plurality of subcarriers from the subcarrier group based on a delay level difference indicated by a phase rotation difference for each of the subcarriers, which differs by a constant value among the subcarriers adjacent to one another; and
a radio transmission step of sequentially receiving transmission data, dispersing the transmission data onto the subcarriers selected, and wirelessly transmitting the transmission data by applying cyclic delay with a delay level 0 or a given delay level greater than the delay level 0 to the transmission data, and the transmission data by applying cyclic delay with a delay level differing by the delay level difference from the given delay level to the transmission data.

14. A multi-carrier radio transmission method, comprising:

a selection step of selecting a plurality of subcarriers at a given interval from a subcarrier group including a plurality of subcarriers allocated at a given frequency interval;
a delay-level-difference obtaining step of obtaining m delay level differences $\mathrm{Cd}_{1,2,\ldots,m}$ indicated by phase rotation differences for respective subcarriers, which differ by a constant value among the sub carriers adjacent to one another, m being equal to or greater than one;
a reference radio transmission step of dispersing transmission data onto the subcarriers selected, and wirelessly transmitting the transmission data by applying cyclic delay with a delay level 0 or a given delay level greater than the delay level 0 to the transmission data; and
a k-th wireless transmission step of dispersing transmission data onto the subcarriers selected, and wirelessly transmitting the transmission data by applying cyclic delay with a delay level differing by the delay level difference

$Cd_k$ obtained in the delay-level-difference obtaining step from the given delay level for the wireless transmission in the reference radio transmission step, k being any one of 1 to m, wherein

the given interval differs from a least common multiple of m pieces of intervals $Is_k$ calculated using the following expressions:

$$Is_k = \text{round}(n \times N/Cd_k) \text{ for Cd such that } 0 \leq Cd \leq N/2;$$

and

$$Is_k = \text{round}(n \times N/(N-Cd_k)) \text{ for Cd such that } N/2 < Cd < N,$$

where N is the number of subcarriers included in the subcarrier group, and n is a natural number.

15. A multi-carrier transmission method, comprising:

a selection step of selecting a plurality of second subcarriers from a subcarrier group including a plurality of first subcarriers allocated at a given frequency interval;
a determining unit that determines, based on the second subcarriers selected, a delay level difference indicated by a phase rotation difference for each of the second subcarriers, which differs by a constant value among the second subcarriers adjacent to one another; and
a radio transmission step of sequentially receiving transmission data, dispersing the transmission data onto the second subcarriers selected, wirelessly transmitting the transmission data by applying cyclic delay with a delay level 0 or a given delay level greater than the delay level 0 to the transmission data, and the transmission data by applying cyclic delay with a delay level differing by the delay level difference from the given delay level to the transmission data.

16. A program that makes a computer function as a multi-carrier radio transmission apparatus that perform wireless communication using a subcarrier group including a plurality of subcarriers allocated at a given frequency interval, the program further makes the computer function as:

a selection unit that selects a plurality of subcarriers from the subcarrier group based on a delay level difference indicated by a phase rotation difference for each of the subcarriers, which differs by a constant value among the subcarriers adjacent to one another; and
a radio transmission unit that sequentially receives transmission data, disperses the transmission data onto the subcarriers selected, wirelessly transmits the transmission data by applying cyclic delay with a delay level 0 or a given delay level greater than the delay level 0 to the transmission data, and the transmission data by applying cyclic delay with a delay level differing by the delay level difference from the given delay level to the transmission data.

17. A program that makes a computer function as a multi-carrier radio transmission apparatus comprising:

a selection unit that selects a plurality of subcarriers at a given interval from a subcarrier group including a plurality of subcarriers allocated at a given frequency interval;
a delay-level-difference obtaining unit that obtains m delay level differences $Cd_{1, 2, ..., m}$ indicated by phase rotation differences for respective subcarriers, which differ by a constant value among the subcarriers adjacent to one another, m being equal to or greater than one;
a reference radio transmission unit that disperses transmission data onto the subcarriers selected, and wirelessly transmits the transmission data by applying cyclic delay with a delay level 0 or a given delay level greater than the delay level 0 to the transmission data; and
a k-th wireless transmission unit that disperses transmission data onto the subcarriers selected, and wirelessly transmits the transmission data by applying cyclic delay with a delay level differing by the delay level difference $Cd_k$ obtained by the delay-level-difference obtaining unit from the given delay level for the wireless transmission performed by the reference radio transmission unit, k being any one of 1 to m, wherein
the given interval differs from a least common multiple of m pieces of intervals $Is_k$ calculated using the following expressions:

$$Is_k = round(n \times N/Cd_k) \text{ for Cd such that } 0 \leq Cd \leq N/2;$$

and

$$Is_k = round(n \times N/(N-Cd_k)) \text{ for Cd such that } N/2 < Cd < N,$$

where N is the number of subcarriers included in the subcarrier group, and n is a natural number.

**18.** A program that makes a computer function as a multi-carrier transmission apparatus comprising:

a selection unit that selects a plurality of second subcarriers from a subcarrier group including a plurality of first subcarriers allocated at a given frequency interval;
a determining unit that determines, based on the second subcarriers selected, a delay level difference indicated by a phase rotation difference for each of the second subcarriers, which differs by a constant value among the second subcarriers adjacent to one another; and
a radio transmission unit that sequentially receives transmission data, disperses the transmission data onto the second subcarriers selected, wirelessly transmits the transmission data by applying cyclic delay with a delay level 0 or a given delay level greater than the delay level 0 to the transmission data, and the transmission data by applying cyclic delay with a delay level differing by the delay level difference from the given delay level to the transmission data.

*FIG. 1*

1:MOBILE COMMUNICATION SYSTEM

*FIG. 2*

TRANSMISSION DATA

10a:BASE STATION DEVICE

EP 2 081 311 A1

FIG. 3

30a : MOBILE STATION DEVICE

# FIG. 4

( a ) BEFORE INTERLEAVING

1 2 3 4 5 6 7 8 9 10 11 12 13 14 15 16 17 18 ... 56 57 58 59 60 61 62 63 64

....

8 SUBCARRIER INTERVAL    8 SUBCARRIER INTERVAL

....

1 9 17 25 33 41 49 57 2 10 18 26 34 42 50 58 3 19 ... 63 8 16 24 32 40 48 56 64

( b ) AFTER INTERLEAVING

....

8 SUBCARRIER INTERVAL    8 SUBCARRIER INTERVAL

....

1 2 3 4 5 6 7 8 9 10 11 12 13 14 15 16 17 18 ... 56 57 58 59 60 61 62 63 64

( c ) AFTER DEINTERLEAVING

EP 2 081 311 A1

FIG. 5A

FIG. 5B

FIG. 5C

28

*FIG. 6*

FIG. 7

TRANSMISSION DATA

14b

ENCODER ~11

MODULATOR ~12a

S/P CONVERTER ~13

INTERLEAVER

50          51
SWITCH    INTERLEAVER

           INTERLEAVER
              52

15          16
IFFT UNIT   P/S CONVERTER

20
19
RADIO UNIT
D/A CONVERTER ~18
GI INSERTER ~17

25
24
RADIO UNIT
D/A CONVERTER ~23
GI INSERTER ~22

TRANSMISSION DATA INFORMATION

CONTROLLER

26b

CYCLIC DELAY UNIT ~21

10b: BASE STATION DEVICE

EP 2 081 311 A1

30

*FIG. 8*

31

EP 2 081 311 A1

31

RADIO UNIT ~32

A/D CONVERTER ~33

SYNCHRONIZER ~34

GI REMOVER ~35

36~ S/P COVNERTER

37~ FFT UNIT

38b

DEINTERLEAVER

60

SWITCH

61

DEINTERLEAVER

DEINTERLEAVER

62

CHANNEL ESTIMATOR ~39

CHANNEL COMPENSATOR

40

DEMAPPER
41

P/S CONVERTER
42

DECODER
43

RECEPTION DATA

RECEPTION DATA INFORMATION → CONTROLLER ~44

30b :MOBILE STATION DEVICE

FIG. 9

*FIG. 10A*

TRANSMISSION DATA

ENCODER 101 → MODULATOR 102 → S/P CONVERTER 103 → INTERLEAVER 104 → IFFT UNIT 105 → P/S CONVERTER 106

107

108 D/A CONVERTER → RADIO UNIT 109 → 110

GI INSERTER 107

100 : MULTI-CARRIER RADIO TRANSMISSION APPARATUS

RADIO UNIT 114 → 115

D/A CONVERTER 113

GI INSERTER 112

CYCLIC DELAY UNIT 111

*FIG. 10B*

121

RADIO UNIT 122

A/D CONVERTER 123

SYNCHRONIZER 124

GI REMOVER 125

126 S/P COVNERTER

127 FFT UNIT

120 : MULTI-CARRIER RADIO RECEPTION APPARATUS

CHANNEL ESTIMATOR 129

DEINTERLEAVER 128 → CHANNEL COMPENSATOR 130 → DEMAPPER 131 → P/S CONVERTER 132 → DECODER 133 → RECEPTION DATA

EP 2 081 311 A1

## FIG. 11A

OFDM SYMBOL

0 ········ N-1

X SAMPLE

N-X ···· N-1 1 ···· N-X-1

CYCLIC DELAY

109

114

121

## FIG. 11B

TIME DOMAIN PROCESSING

f

2π

0

f

2π

PHASE
ROTATION 0

FREQUENCY DOMAIN PROCESSING

109

114

121

*FIG. 12A*

SUBCARRIER NUMBER

*FIG. 12B*

SUBCARRIER NUMBER

## INTERNATIONAL SEARCH REPORT

| | International application No. |
|---|---|
| | PCT/JP2007/069874 |

| A. CLASSIFICATION OF SUBJECT MATTER |
|---|
| *H04J11/00*(2006.01)i, *H04B7/06*(2006.01)i |

According to International Patent Classification (IPC) or to both national classification and IPC

| B. FIELDS SEARCHED |
|---|
| Minimum documentation searched (classification system followed by classification symbols) |
| H04J11/00, H04B7/06 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | Gerhard Bauch, Javed Shamim Malik, Parameter Optimization, Interleaving and Multiple Access in OFDM with Cyclic Delay Diversity, Vehicular Technology Conference, 2004. VTC 2004-Spring. 2004 IEEE 59th, Vol.1, 2004.05.19, pp.505-509 | 1-18 |
| A | Gerhard Bauch, Capacity Optimization of Cyclic Delay Diversity, Vehicular Technology Conference, 2004. VTC2004-Fall. 2004 IEEE 60th, Vol.3, 2004.09.29, pp.1820-1824 | 1-18 |

| ☒ Further documents are listed in the continuation of Box C. | ☐ See patent family annex. |
|---|---|

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 28 December, 2007 (28.12.07) | 15 January, 2008 (15.01.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2007/069874

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-354708 A  (Samsung Electronics Co., Ltd.),<br>22 December, 2005 (22.12.05),<br>Full text; all drawings<br>& EP 1605607 A1     & US 2005/0281240 A1<br>& CN 1728616 A      & KR 2005118031 A<br>& AU 2005202543 A1  & IN 200500499 I2 | 1-18 |
| A | NTT DoCoMo, Investigations on Inter-Sector Diversity in Evolved UTRA Downlink, 3GPP TSG RAN WG1 Ad Hoc on LTE, R1-050615, 2005.06.21, pp.1-7 | 1-18 |
| E,A | WO 2007/072822 A1  (Sharp Corp.),<br>28 June, 2007 (28.06.07),<br>Full text; all drawings<br>(Family: none) | 1-18 |

Form PCT/ISA/210 (continuation of second sheet) (April 2007)

## REFERENCES CITED IN THE DESCRIPTION

**Patent documents cited in the description**

• JP 2006280129 A

**Non-patent literature cited in the description**

• Intra-Node B Macro Diversity based on Cyclic Delay Transmissions. *R1-050795, 3GPP TSG RAN WG1 #42 on LTE,* 29 August 2005